(19) Europäisches Patentamt
European Patent Office
Office européen des brevets

(11) EP 2 736 976 B1

(12) **EUROPEAN PATENT SPECIFICATION**

(45) Date of publication and mention of the grant of the patent:
**26.07.2017 Bulletin 2017/30**

(21) Application number: **12818023.9**

(22) Date of filing: **29.06.2012**

(51) Int Cl.:
***C08L 83/12*** *(2006.01)* ***C08L 71/12*** *(2006.01)*
***C08L 25/08*** *(2006.01)* ***C08K 5/521*** *(2006.01)*
***C08G 77/46*** *(2006.01)*

(86) International application number:
**PCT/US2012/044897**

(87) International publication number:
**WO 2013/015945 (31.01.2013 Gazette 2013/05)**

(54) **FLAME RETARDANT POLY(ARYLENE ETHER)-POLYSILOXANE BLOCK COPOLYMER COMPOSITION AND ARTICLE**

FEUERFESTE POLY(ARYLENETHER-)POLYSILOXAN-BLOCKCOPOLYMERZUSAMMENSETZUNG UND ARTIKEL DARAUS

COMPOSITION DE COPOLYMÈRE À BLOCS DE POLY(OXYDE D'ARYLÈNE)-POLYSILOXANE IGNIFUGE ET ARTICLE CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2011 US 201113189651**

(43) Date of publication of application:
**04.06.2014 Bulletin 2014/23**

(73) Proprietor: **SABIC Global Technologies B.V.**
**4612 PX Bergen op Zoom (NL)**

(72) Inventor: **LIETZAU, Christian**
**Delmar, New York 12158 (US)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(56) References cited:
**WO-A1-2010/047122** **US-A1- 2010 139 944**
**US-A1- 2010 139 944** **US-A1- 2011 152 420**
**US-A1- 2011 152 431** **US-A1- 2011 152 471**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 736 976 B1

## Description

### BACKGROUND OF THE INVENTION

Poly(arylene ether)s are a class of plastics known for excellent water resistance, dimensional stability, and inherent flame retardancy, as well as high oxygen permeability and oxygen/nitrogen selectivity. Properties such as strength, stiffness, chemical resistance, and heat resistance can be tailored by blending poly(arylene ether)s with various other plastics in order to meet the requirements of a wide variety of consumer products, for example, plumbing fixtures, electrical boxes, automotive parts, and insulation for wire and cable.

Poly(arylene ether)s are themselves relatively flame retardant, and their flame retardancy can be further improved by the use of flame retardant additives. It has also been shown that flame retardancy can be improved by blending poly(arylene ether)s with poly(arylene ether)-polysiloxane block copolymers. See, for example, U.S. Patent Application Publication No. US 2010/0139944 A1 of Guo et al., describing wire and cable insulation compositions including poly(arylene ether)s and poly(arylene ether)-polysiloxane block copolymers. The compositions described in Guo et al. exhibit the flexibility required for wire and cable insulation. As a consequence, they lack the stiffness needed for use in rigid injection molded articles, such as photovoltaic junction boxes and connectors. There remains a need for poly(arylene ether) injection molding compositions exhibiting adequate stiffness and an advantageous balance of two or more properties selected from flame retardancy, impact strength, melt flow, and heat resistance, while not substantially degrading the other properties.

### BRIEF DESCRIPTION OF THE INVENTION

The need for a rigid composition that exhibits a good balance of two or more properties selected from flame retardancy, impact strength, melt flow, and heat resistance, while not substantially degrading other properties, is met by a composition comprising greater than 55 to about 95 weight percent of a poly(arylene ether)-polysiloxane block copolymer reaction product comprising a poly(arylene ether) homopolymer, and a poly(arylene ether)-polysiloxane block copolymer comprising a poly(arylene ether) block, and a polysiloxane block comprising, on average, about 20 to about 80 siloxane repeating units; wherein the poly(arylene ether)-polysiloxane block copolymer reaction product comprises about 1 to about 30 weight percent siloxane repeating units and about 70 to about 99 weight percent arylene ether repeating units; wherein the poly(arylene ether)-polysiloxane block copolymer reaction product is the product of a process comprising oxidatively copolymerizing a monomer mixture comprising a monohydric phenol and a hydroxyaryl-terminated polysiloxane; and wherein the poly(arylene ether)-polysiloxane block copolymer reaction product has a weight average molecular weight of at least 30,000 atomic mass units; about 1 to about 40 weight percent of a styrenic polymer selected from the group consisting of rubber-modified polystyrenes, unhydrogenated block copolymers of an alkenyl aromatic compound and a conjugated diene, hydrogenated block copolymers of an alkenyl aromatic compound and a conjugated diene, and mixtures thereof; and about 1 to about 40 weight percent of a flame retardant comprising an organophosphate ester; wherein all weight percents are based on the total weight of the composition, unless a different weight basis is specified; and wherein the composition exhibits a flexural modulus of 1500 to 3000 megapascals, measured at 23°C and a sample thickness of 3.2 millimeters in accordance with ASTM D 790-10.

Another embodiment is a composition comprising about 67 to about 87 weight percent of a poly(arylene ether)-polysiloxane block copolymer reaction product comprising a poly(arylene ether) homopolymer, and a poly(arylene ether)-polysiloxane block copolymer comprising a poly(arylene ether) block, and a polysiloxane block comprising, on average, about 20 to about 80 siloxane repeating units; wherein the poly(arylene ether) block comprises arylene ether repeating units having the structure

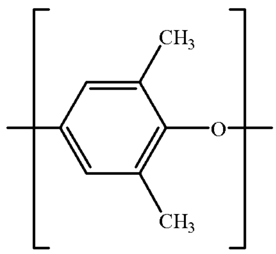

;

wherein the polysiloxane block has the structure

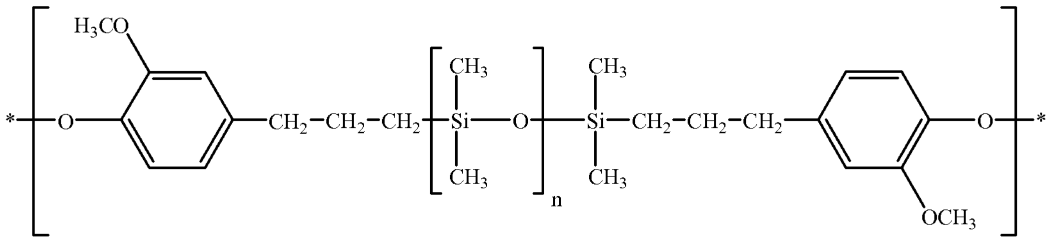

wherein n is about 30 to about 60; wherein the poly(arylene ether)-polysiloxane block copolymer reaction product comprises about 1 to about 8 weight percent siloxane repeating units and about 92 to about 99 weight percent arylene ether repeating units; wherein the poly(arylene ether)-polysiloxane block copolymer reaction product is the product of a process comprising oxidatively copolymerizing a monomer mixture comprising a monohydric phenol and a hydroxyaryl-terminated polysiloxane; and wherein the poly(arylene ether)-polysiloxane block copolymer reaction product has a weight average molecular weight of at least 30,000 atomic mass units; about 5 to about 17 weight percent of a styrenic polymer consisting of a hydrogenated block copolymer of an alkenyl aromatic compound and a conjugated diene, and mixtures thereof; and about 8 to about 15 weight percent of a flame retardant comprising resorcinol bis(diphenyl phosphate), bisphenol A bis(diphenyl phosphate), or a mixture thereof; and wherein all weight percents are based on the total weight of the composition, unless a different weight basis is specified.

Another embodiment is an injection molded article comprising the composition.

These and other embodiments are described in detail below.

DETAILED DESCRIPTION OF THE INVENTION

The present inventors have determined that molding compositions having a good balance of flame retardancy, impact strength, melt flow, and heat resistance can be obtained by blending a poly(arylene ether)-polysiloxane block copolymer reaction product, a hydrogenated block copolymer, and a flame retardant comprising an organophosphate ester in specific amounts. Moreover, in addition to having a good balance of the above advantageous properties, the compositions have the necessary degree of stiffness to make them ideally suited for use in rigid articles.

It is generally possible to improve one of flame retardancy, impact strength, flow, and heat resistance by modification of a poly(arylene ether) homopolymer composition. However, improvement in any one of these properties is typically obtained only by sacrificing the other properties. For example, when flame retardancy is improved by increasing the amount of a flame retardant, the impact strength and flow of the composition are typically adversely affected. Therefore, it is surprising that two or more of these properties can be either improved or maintained by the substitution of a poly(arylene ether)-polysiloxane block copolymer reaction product for a poly(arylene ether) homopolymer, as is demonstrated by the working examples below. Thus, significant and unexpected advantages flow from the use of the particular combination of poly(arylene ether)-polysiloxane block copolymer reaction product, hydrogenated block copolymer, and flame retardant comprising an organophosphate ester in the specific amounts of the present invention.

One embodiment is a composition comprising greater than 55 to about 95 weight percent of a poly(arylene ether)-polysiloxane block copolymer reaction product comprising a poly(arylene ether) homopolymer, and a poly(arylene ether)-polysiloxane block copolymer comprising a poly(arylene ether) block, and a polysiloxane block comprising, on average, about 20 to about 80 siloxane repeating units; wherein the poly(arylene ether)-polysiloxane block copolymer reaction product comprises about 1 to about 30 weight percent siloxane repeating units and about 70 to about 99 weight percent arylene ether repeating units; wherein the poly(arylene ether)-polysiloxane block copolymer reaction product is the product of a process comprising oxidatively copolymerizing a monomer mixture comprising a monohydric phenol and a hydroxyaryl-terminated polysiloxane; and wherein the poly(arylene ether)-polysiloxane block copolymer reaction product has a weight average molecular weight of at least 30,000 atomic mass units; about 1 to about 40 weight percent of a styrenic polymer selected from the group consisting of rubber-modified polystyrenes, unhydrogenated block copolymers of an alkenyl aromatic compound and a conjugated diene, hydrogenated block copolymers of an alkenyl aromatic compound and a conjugated diene, and mixtures thereof; and about 1 to about 40 weight percent of a flame retardant comprising an organophosphate ester; wherein all weight percents are based on the total weight of the composition, unless a different weight basis is specified; and wherein the composition exhibits a flexural modulus of 1500 to 3000 megapascals, measured at 23°C and a sample thickness of 3.2 millimeters in accordance with ASTM D 790-10.

An important component of the present composition is a poly(arylene ether)-polysiloxane block copolymer reaction product comprising a poly(arylene ether)-polysiloxane block copolymer and a poly(arylene ether) homopolymer. For brevity, this component is sometimes referred to herein as the "reaction product". The poly(arylene ether)-polysiloxane block copolymer reaction product is synthesized by oxidative polymerization of a mixture of monohydric phenol and a hydroxyaryl-terminated polysiloxane. This oxidative polymerization produces poly(arylene ether)-polysiloxane block copolymer as the desired product and poly(arylene ether) homopolymer as a by-product. It is difficult and unnecessary to separate the poly(arylene ether) homopolymer from the poly(arylene ether)-polysiloxane block copolymer. The poly(arylene ether)-polysiloxane block copolymer is therefore incorporated into the present composition as a "poly(arylene ether)-polysiloxane block reaction product" that comprises both the poly(arylene ether) and the poly(arylene ether)-polysiloxane block copolymer.

The poly(arylene ether)-polysiloxane block copolymer comprises a poly(arylene ether) block and a polysiloxane block. The poly(arylene ether) block is a residue of the polymerization of the monohydric phenol. In some embodiments, the poly(arylene ether) block comprises arylene ether repeating units having the structure

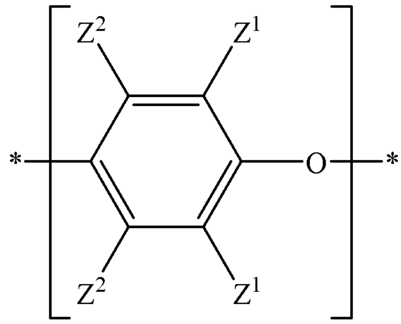

wherein for each repeating unit, each $Z^1$ is independently halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atoms; and each $Z^2$ is independently hydrogen, halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atom. In some embodiments, the poly(arylene ether) block comprises 2,6-dimethyl-1,4-phenylene ether repeating units, that is, repeating units having the structure

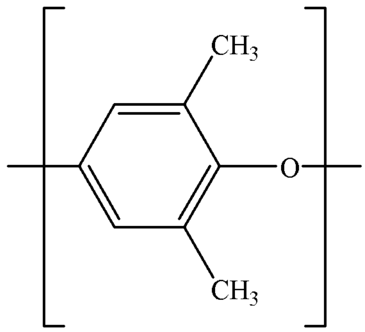

,

2,3,6-trimethyl-1,4-phenylene ether repeating units, or a combination thereof.

The polysiloxane block is a residue of the hydroxyaryl-terminated polysiloxane. In some embodiments, the polysiloxane block comprises repeating units having the structure

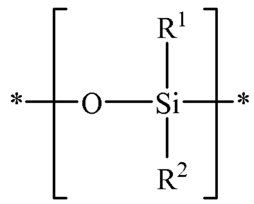

wherein each occurrence of $R^1$ and $R^2$ is independently hydrogen, $C_1$-$C_{12}$ hydrocarbyl or $C_1$-$C_{12}$ halohydrocarbyl; and the polysiloxane block further comprises a terminal unit having the structure

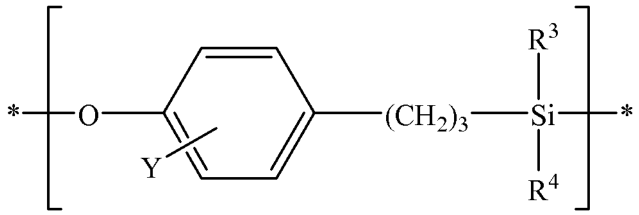

wherein Y is hydrogen, $C_1$-$C_{12}$ hydrocarbyl, $C_1$-$C_{12}$ hydrocarbyloxy, or halogen, and wherein each occurrence of $R^3$ and $R^4$ is independently hydrogen, $C_1$-$C_{12}$ hydrocarbyl or $C_1$-$C_{12}$ halohydrocarbyl. In some embodiments, the polysiloxane repeating units comprise dimethylsiloxane ($-Si(CH_3)_2O-$) units. In some embodiments, the polysiloxane block has the structure

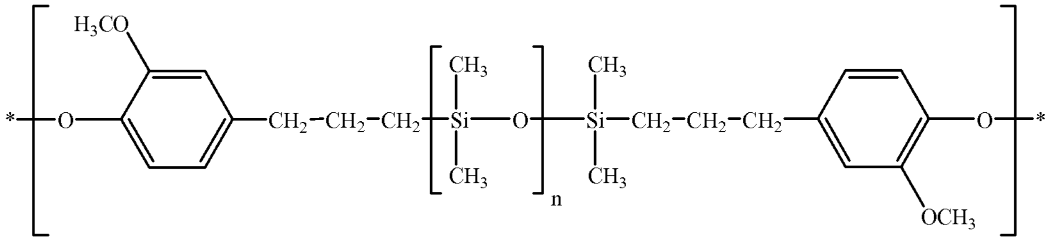

wherein n is 20 to 60.

The hydroxyaryl-terminated polysiloxane comprises at least one hydroxyaryl terminal group. In some embodiments, the hydroxyaryl-terminated polysiloxane has a single hydroxyaryl terminal group, in which case a poly(arylene ether)-polysiloxane diblock copolymer is formed. In other embodiments, the hydroxyaryl-terminated polysiloxane has two hydroxyaryl terminal groups, in which case in which case poly(arylene ether)-polysiloxane diblock copolymers and/or poly(arylene ether)-polysiloxane-poly(arylene ether) triblock copolymers are formed. It is also possible for the hydroxyaryl-terminated polysiloxane to have a branched structure that allows three or more hydroxyaryl terminal groups and the formation of corresponding branched copolymers.

In some embodiments, the hydroxyaryl-terminated polysiloxane comprises, on average, about 20 to about 80 siloxane repeating units, specifically about 25 to about 70 siloxane repeating units, more specifically about 30 to about 60 siloxane repeating units, still more specifically about 35 to about 50 siloxane repeating units, yet more specifically about 40 to about 50 siloxane repeating units. The number of siloxane repeating units in the polysiloxane block is essentially unaffected by the copolymerization and isolation conditions, and it is therefore equivalent to the number of siloxane repeating units in the hydroxyaryl-terminated polysiloxane starting material. When not otherwise known, the average number of siloxane repeating units per hydroxylaryl-terminated polysiloxane molecule can be determined by NMR methods that compare the intensity of signals associated with the siloxane repeating units to those associated with the hydroxyaryl terminal groups. For example, when the hydroxyaryl-terminated polysiloxane is a eugenol-capped polydimethylsiloxane, it is possible to determine the average number of siloxane repeating units by a proton nuclear magnetic resonance ($^1H$ NMR) method in which integrals for the protons of the dimethylsiloxane resonance and the protons of the eugenol methoxy group are compared.

In some embodiments, the poly(arylene ether)-polysiloxane block copolymer reaction product has a weight average molecular weight of at least 30,000 atomic mass units. For example, the reaction product can have a weight average molecular weight of 30,000 to about 150,000 atomic mass units, specifically about 35,000 to about 120,000 atomic mass units, more specifically about 40,000 to about 90,000 atomic mass units, even more specifically about 45,000 to about 70,000 atomic mass units. In some embodiments, the poly(arylene ether)-polysiloxane block copolymer reaction product has a number average molecular weight of about 10,000 to about 50,000 atomic mass units, specifically about 10,000 to about 30,000 atomic mass units, more specifically about 14,000 to about 24,000 atomic mass units. A detailed chromatographic method for determining molecular weight is described in the working examples below.

In some embodiments, the poly(arylene ether)-polysiloxane block copolymer reaction product has an intrinsic viscosity of at least 0.3 deciliters per gram, as measured at 25°C in chloroform. In some embodiments, the intrinsic viscosity is 0.3 to about 0.5, specifically 0.31 to about 0.5, more specifically about 0.35 to about 0.47 deciliters per gram.

One indication of the efficiency with which the hydroxyaryl-terminated polysiloxane is incorporated into block copolymer is the low concentration of so-called poly(arylene ether) "tail" groups. In a homopolymerization of 2,6-dimethylphenol, a large fraction of product molecules have a so-called head-to-tail structure in which the linear product molecule is terminated on one end by a 3,5-dimethyl-4-hydroxyphenyl "head" and on the other end by a 2,6-dimethylphenoxy "tail". Thus, when the monohydric phenol consists of 2,6-dimethylphenol, the poly(arylene ether) tail group has the

structure

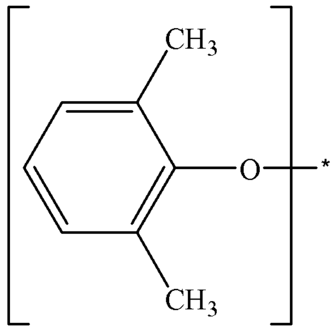

wherein the 3-, 4-, and 5-positions of the ring are substituted with hydrogen atoms (that is, the term "2,6-dimethylphenoxy" does not encompass divalent 2,6-dimethyl-1,4-phenylene ether groups). In a copolymerization of monohydric phenol with hydroxyaryl-terminated polysiloxane, incorporation of the hydroxyaryl-terminated polysiloxane into block copolymer will reduce the concentration of arylene ether "tail" groups. Thus, in some embodiments, the monohydric phenol consists of 2,6-dimethylphenol, and the thermoplastic composition of comprises less than or equal to 0.4 weight percent, specifically 0.1 to 0.4 weight percent, of 2,6-dimethylphenoxy groups, based on the weight of the reaction product. The 2,6-dimethylphenoxy tail end groups are characteristic of poly(2,6-dimethyl-1,4-phenylene ether) homopolymer with a head-to-tail (hydroxy-monoterminated) structure in which the linear product molecule is terminated on one end by a 3,5-dimethyl-4-hydroxyphenyl "head" and on the other end by a 2,6-dimethylphenoxy "tail". So, the low concentration of 2,6-dimethylphenoxy tail end groups is an indication that the thermoplastic composition comprises a reduced concentration of such monofunctional homopolymer and an increased concentration of the desired poly(arylene ether)-polysiloxane block copolymer.

The poly(arylene ether)-polysiloxane block copolymer reaction product can further include groups derived from a diphenoquinone, which is itself an oxidation product of the monohydric phenol. For example, when the monohydric phenol is 2,6-dimethylphenol, the diphenoquinone is 3,3',5,5'-tetramethyl-4,4'-diphenoquinone. During the build phase of the reaction, the diphenoquinone is typically incorporated into the "tail" end of a head-to-tail poly(arylene ether) as the corresponding biphenyl group. Through further reactions, the terminal biphenyl group can become an internal biphenyl group in the poly(arylene ether) chain. In some embodiments, the monohydric phenol consists of 2,6-dimethylphenol, and the thermoplastic composition comprises 0.1 to 2.0 weight percent, and specifically 1.1 to 2.0 weight percent, of 2,6-dimethyl-4-(3,5-dimethyl-4-hydroxyphenyl)-phenoxy("biphenyl") groups. The biphenyl groups are present only in bifunctional (head-to-head or hydroxyl-diterminated) structure. So, the low concentration of biphenyl group is an indication that the reaction product comprises a reduced concentration of such bifunctional homopolymer and an increased concentration of the desired poly(arylene ether)-polysiloxane block copolymer.

The oxidative copolymerization can be conducted with a reaction time greater than or equal to 110 minutes. The reaction time is the elapsed time between initiation and termination of oxygen flow. (Although, for brevity, the description herein repeatedly refers to "oxygen" or "oxygen flow", it will be understood that any oxygen-containing gas, including air, can be used as the oxygen source.) In some embodiments, the reaction time is 110 to about 300 minutes, specifically about 140 to about 250 minutes, more specifically about 170 to about 220 minutes.

The oxidative copolymerization can include a "build time", which is the time between completion of monomer addition and termination of oxygen flow. In some embodiments, the reaction time comprises a build time of about 80 to about 160 minutes. In some embodiments, the reaction temperature during at least part of the build time can be about 40 to about 60°C, specifically about 45 to about 55°C.

The poly(arylene ether)-polysiloxane block copolymer reaction product can be isolated from solution by an isolation procedure that minimizes volatile and nonvolatile contaminants. For example, in some embodiments, the thermoplastic composition comprises less than or equal to 1 weight percent of total volatiles, specifically 0.2 to 1 weight percent of total volatiles, determined according to the procedure in the working examples below. In some embodiments, the monomer mixture is oxidatively copolymerized in the presence of a catalyst comprising a metal (such as copper or manganese), and the poly(arylene ether)-polysiloxane block copolymer reaction product comprises less than or equal to 100 parts per million by weight of the metal, specifically 5 to 100 parts per million by weight of the metal, more specifically 10 to 50 parts per million by weight of the metal, even more specifically 20 to 50 parts by weight of the metal, based on the weight of the poly(arylene ether)-polysiloxane block copolymer reaction product.

Certain isolation procedures make it possible to assure that the poly(arylene ether)-polysiloxane block copolymer reaction product is essentially free of residual hydroxyaryl-terminated polysiloxane starting material. In other words, these isolation procedures assure that the polysiloxane content of the reaction product consists essentially of poly(arylene

ether)-polysiloxane block copolymer and poly(arylene ether) homopolymer. After termination of the copolymerization reaction, the poly(arylene ether)-polysiloxane block copolymer reaction product can be isolated from solution using methods known in the art for isolating poly(arylene ether)s from solution. For example, the poly(arylene ether)-polysiloxane block copolymer reaction product can be isolated by precipitation with an antisolvent comprising at least 50 weight percent of one or more $C_1$-$C_6$ alkanols, such as methanol, ethanol, n-propanol, or isopropanol. The use of an isopropanol-containing antisolvent is advantageous because isopropanol is a good solvent for unreacted hydroxyaryl-terminated polysiloxane. Therefore, precipitation and/or washing with an isopropanol-containing antisolvent (e.g., isopropanol alone) substantially remove hydroxyaryl-terminated polysiloxane from the isolated product. Thus, in some embodiments, the process for forming the poly(arylene ether)-polysiloxane block copolymer reaction product comprises isolation by precipitation with an isopropanol-containing antisolvent, and the poly(arylene ether)-polysiloxane block copolymer reaction product comprises less than or equal to 1.5 weight percent of the hydroxyaryl-terminated polysiloxane, specifically less than or equal to 1 weight percent of the hydroxyaryl-terminated polysiloxane, more specifically less than or equal to 0.5 weight percent of the hydroxyaryl-terminated polysiloxane, based on the total weight of the poly(arylene ether)-polysiloxane block copolymer reaction product.

In some embodiments, the poly(arylene ether)-polysiloxane block copolymer reaction product incorporates greater than 75 weight percent, of the hydroxyaryl-terminated polysiloxane starting material into the poly(arylene ether)-polysiloxane block copolymer. Specifically, the amount of the hydroxyaryl-terminated polysiloxane incorporated into the poly(arylene ether)-polysiloxane block copolymer can be at least 80 weight percent, more specifically at least 85 weight percent, still more specifically at least 90 weight percent, yet more specifically at least 95 weight percent.

Additional details relating to the preparation, characterization, and properties of the poly(arylene ether)-polysiloxane block copolymer reaction product can be found in U.S. Patent Application Publication No. US 2009/0318635 of Carillo et al. and in copending U.S. Patent Application Serial No. 13/169,137, filed June 27, 2011.

The poly(arylene ether)-polysiloxane block copolymer reaction product comprises about 1 to about 30 weight percent siloxane repeating units and about 70 to about 99 weight percent arylene ether repeating units, based on the total weight of the reaction product. It will be understood that the siloxane repeating units are derived from the hydroxyaryl-terminated polysiloxane, and the arylene ether repeating units are derived from the monohydric phenol. In some embodiments, such as, for example, when the poly(arylene ether)-polysiloxane block copolymer reaction product is purified via precipitation in isopropanol, the siloxane repeating units consist essentially of the residue of hydroxyaryl-terminated polysiloxane that has been incorporated into the poly(arylene ether)-polysiloxane block copolymer.

In some embodiments, the reaction product comprises about 1 to about 8 weight percent siloxane repeating units and about 12 to about 99 weight percent arylene ether repeating units, based on the total weight of the reaction product. Within these ranges, the amount of siloxane repeating units can be 2 to 7 weight percent, specifically 3 to 6 weight percent, more specifically 4 to 5 weight percent; and the amount of arylene ether repeating units can be 93 to 98 weight percent, specifically 94 to 97 weight percent, more specifically 95 to 96 weight percent.

The thermoplastic composition can also include relatively small amounts of very low molecular weight species. Thus, in some embodiments, the thermoplastic composition comprises less than 25 weight percent of molecules having a molecular weight less than 10,000 atomic mass units, specifically 5 to 25 weight percent of molecules having a molecular weight less than 10,000 atomic mass units, more specifically 7 to 21 weight percent of molecules having a molecular weight less than 10,000 atomic mass units. In some embodiments, the molecules having a molecular weight less than 10,000 atomic mass units comprise, on average, 5 to 10 weight percent siloxane repeating units, specifically 6 to 9 weight percent siloxane repeating units.

Similarly, the thermoplastic composition can also include relatively small amounts of very high molecular weight species. Thus, in some embodiments, the thermoplastic composition comprises less than 25 weight percent of molecules having a molecular weight greater than 100,000 atomic mass units, specifically 5 to 25 weight percent of molecules having a molecular weight greater than 100,000 atomic mass units, more specifically 7 to 23 weight percent of molecules having a molecular weight greater than 100,000 atomic mass units. In some embodiments, the molecules having a molecular weight greater than 100,000 atomic mass units comprise, on average, 3 to 6 weight percent siloxane repeating units, specifically 4 to 5 weight percent siloxane repeating units.

In a very specific procedure for preparing the poly(arylene ether)-polysiloxane block copolymer reaction product, the monohydric phenol is 2,6-dimethylphenol; the hydroxyaryl-terminated polysiloxane is a eugenol-capped polydimethylsiloxane comprising 35 to 60 dimethylsiloxane units; the oxidative copolymerization is initiated in the presence of at least 90 weight percent of the hydroxyaryl-terminated polysiloxane and 2 to 20 weight percent of the monohydric phenol; the oxidative copolymerization is conducted with a reaction time of 170 to 220 minutes; and the hydroxyaryl-terminated polysiloxane constitutes 2 to 7 weight percent of the combined weight of the monohydric phenol and the capped polysiloxane.

In some embodiments, the poly(arylene ether)-polysiloxane block copolymer reaction product comprises about 8 to about 30 weight percent siloxane repeating units and about 70 to about 92 weight percent arylene ether repeating units, based on the total weight of the reaction product. Within these ranges, the amount of siloxane repeating units can

be about 10 to about 27 weight percent, specifically about 12 to about 24 weight percent, more specifically about 14 to about 22 weight percent, even more specifically about 16 to about 20 weight percent; and the amount of arylene ether repeating units can be about 74 to about 90 weight percent, specifically about 76 to about 88 weight percent, more specifically about 78 to about 86 weight percent, yet more specifically about 80 to about 84 weight percent.

In some embodiments, the poly(arylene ether)-polysiloxane block copolymer reaction product comprises about 15 to about 25 weight percent siloxane repeating units and about 75 to 85 weight percent arylene ether repeating units. Within the range of 15 to about 25 weight percent siloxane repeating units, the weight percent siloxane repeating units can be about 16 to about 24 weight percent, specifically about 17 to about 22 weight percent, more specifically about 18 to about 20 weight percent. Within the range of about 75 to 85 weight percent, the weight percent arylene ether repeating units can be about 76 to about 84 weight percent, specifically about 78 to about 83 weight percent, more specifically about 80 to about 82 weight percent.

In a very specific embodiment of the poly(arylene ether)-polysiloxane block copolymer reaction product, the monohydric phenol is 2,6-dimethylphenol; the hydroxyaryl-terminated polysiloxane is a eugenol-capped polydimethylsiloxane comprising about 30 to about 60 dimethylsiloxane units; the hydroxyaryl-terminated polysiloxane constitutes about 10 to about 28 weight percent, specifically about 14 to about 26 weight percent, more specifically about 18 to about 24 weight percent of the combined weight of the monohydric phenol and the hydroxyaryl-terminated polysiloxane; the thermoplastic composition incorporates greater than 85 weight percent of the hydroxyaryl-terminated polysiloxane into the poly(arylene ether)-polysiloxane block copolymer; the thermoplastic composition comprises 15 to about 25 weight percent, specifically about 16 to about 24 weight percent, more specifically about 17 to about 22 weight percent, even more specifically about 18 to about 20 weight percent siloxane repeating units and about 75 to 85 weight percent, specifically about 76 to about 84 weight percent, more specifically about 78 to about 83 weight percent, even more specifically about 80 to about 82 weight percent arylene ether repeating units, based on the total weight of the reaction product; and the reaction product has a weight average molecular weight of 30,000 to 150,000 atomic mass units.

In another embodiment, the poly(arylene ether)-polysiloxane block copolymer reaction product comprises a poly(arylene ether); and a poly(arylene ether)-polysiloxane block copolymer comprising a poly(arylene ether) block, and a polysiloxane block comprising, on average, about 20 to about 80 siloxane repeating units, specifically about 25 to about 70 siloxane repeating units, more specifically about 30 to about 60 siloxane repeating units, even more specifically about 35 to about 50 siloxane repeating units, still more specifically about 40 to about 50 siloxane repeating units; wherein the thermoplastic composition comprises greater than 8 to about 30 weight percent, specifically about 10 to about 27 weight percent, more specifically about 12 to about 24 weight percent, even more specifically about 14 to about 22 weight percent, yet more specifically about 16 to about 20 weight percent siloxane repeating units, and about 70 to less than 92 weight percent, specifically about 74 to about 90 weight percent, more specifically about 77 to about 88 weight percent, even more specifically about 78 to about 86 weight percent, yet more specifically about 84 to about 80 weight percent arylene ether repeating units, based on the total weight of the poly(arylene ether) and the poly(arylene ether)-polysiloxane block copolymer; wherein the thermoplastic composition is the product of a process comprising oxidatively copolymerizing a monomer mixture comprising a monohydric phenol and a hydroxyaryl-terminated polysiloxane; and wherein the thermoplastic composition has a weight average molecular weight of at least 30,000 atomic mass units, specifically about 30,000 to about 150,000 atomic mass units, more specifically about 35,000 to about 120,000 atomic mass units, still more specifically about 40,000 to about 90,000 atomic mass units, yet more specifically about 45,000 to about 70,000 atomic mass units.

In some embodiments, the poly(arylene ether)-polysiloxane block copolymer reaction product comprises 15 to about 25 weight percent siloxane repeating units and about 75 to 85 weight percent arylene ether repeating units. Within the range of 15 to about 25 weight percent siloxane repeating units, the weight percent of siloxane repeating units can be about 16 to about 24 weight percent, specifically about 17 to about 22 weight percent, even more specifically about 18 to about 20 weight percent. Within the range of about 75 to 85 weight percent, the weight percent of arylene ether repeating units can be about 76 to about 84 weight percent, specifically about 78 to about 83 weight percent, more specifically about 80 to about 82 weight percent. These repeating unit amounts are particularly applicable to thermoplastic composition after precipitation from isopropanol, which substantially removes free hydroxyaryl-terminated polysiloxane. In this embodiment, the poly(arylene ether)-polysiloxane block copolymer reaction product is distinguished from the poly(arylene ether)-polysiloxane block copolymer reaction product of Carrillo US 2009/0318635 A1, none of which comprises more than 14 weight percent siloxane repeating units.

In some embodiments, the poly(arylene ether)-polysiloxane block copolymer reaction product comprises less than 20 weight percent, specifically less than 18 weight percent, more specifically less than 16 weight percent, even more specifically less than 14 weight percent, of molecules having a molecular weight less than 10,000 atomic mass units. In some embodiments, the molecules having a molecular weight less than 10,000 atomic mass units comprise, on average, about 10 to about 18 weight percent, specifically about 12 to about 16 weight percent, siloxane repeating units. In some embodiments, the reaction product comprises less than 26 weight percent, specifically less than 24 weight percent, more specifically less than 22 weight percent, even more specifically less than 20 weight percent, of molecules

having a molecular weight greater than 100,000 atomic mass units. In some embodiments, the molecules having a molecular weight greater than 100,000 atomic mass units comprise, on average, about 17 to about 25 weight percent, specifically about 19 to about 23 weight percent, siloxane repeating units. The limitations in this paragraph can apply when the reaction product has been isolated by precipitation from isopropanol.

In some embodiments of the poly(arylene ether)-polysiloxane block copolymer reaction product, it comprises less than 20 weight percent, specifically less than 18 weight percent, more specifically less than 16 weight percent, even more specifically less than 14 weight percent, of molecules having a molecular weight less than 10,000 atomic mass units; and the thermoplastic composition comprises less than 26 weight percent, specifically less than 24 weight percent, more specifically less than 22 weight percent, even more specifically less than 20 weight percent, of molecules having a molecular weight greater than 100,000 atomic mass units.

In some embodiments of the poly(arylene ether)-polysiloxane block copolymer composition, the molecules having a molecular weight less than 10,000 atomic mass units comprise, on average, about 10 to about 18 weight percent, specifically about 12 to about 16 weight percent, siloxane repeating units; and the molecules having a molecular weight greater than 100,000 atomic mass units comprise, on average, about 17 to about 25 weight percent siloxane repeating units.

In some embodiments of the poly(arylene ether)-polysiloxane block copolymer, the hydroxyaryl-terminated polysiloxane comprises 35 to about 60 siloxane repeating units, specifically about 40 to about 50 siloxane repeating units. When the hydroxyaryl-terminated polysiloxane is a eugenol-capped polydimethylsiloxane, it is possible to determine the average number of siloxane repeating units by a $^1H$ NMR method in which integrals for the protons of the dimethylsiloxane resonance and the protons of the eugenol methoxy group are compared. The hydroxyaryl-terminated polysiloxane comprises at least one hydroxyaryl terminal group. In some embodiments, the hydroxyaryl-terminated polysiloxane has a single hydroxyaryl terminal group, in which case a poly(arylene ether)-polysiloxane diblock copolymer is formed. In other embodiments, the hydroxyaryl-terminated polysiloxane has two hydroxyaryl terminal groups, in which case poly(arylene ether)-polysiloxane diblock and/or triblock copolymers are formed. It is also possible for the hydroxyaryl-terminated polysiloxane to have a branched structure that allows three or more hydroxyaryl terminal groups.

In some embodiments, the composition comprises the poly(arylene ether)-polysiloxane block copolymer reaction product in an amount of greater than 55 to about 95 weight percent, specifically 56 to about 92 weight percent, more specifically 58 to about 89 weight percent, still more specifically 60 to about 86 weight percent, and yet more specifically about 65 to about 83 weight percent, based on the total weight of the composition. In some embodiments, the composition comprises about 67 to about 87 weight percent of the poly(arylene ether)-polysiloxane block copolymer reaction product.

In addition to the poly(arylene ether)-polysiloxane block copolymer reaction product, the composition comprises a styrenic polymer selected from the group consisting of rubber-modified polystyrenes, unhydrogenated block copolymers of an alkenyl aromatic compound and a conjugated diene, hydrogenated block copolymers of an alkenyl aromatic compound and a conjugated diene, and mixtures thereof.

The styrenic copolymer can be a rubber-modified polystyrene. Rubber-modified polystyrenes comprise polystyrene and polybutadiene. Rubber-modified polystyrenes are sometimes referred to as "high-impact polystyrenes" or "HIPS". In some embodiments, the rubber-modified polystyrene comprises 80 to 96 weight percent polystyrene, specifically 88 to 94 weight percent polystyrene; and 4 to 20 weight percent polybutadiene, specifically 6 to 12 weight percent polybutadiene, based on the weight of the rubber-modified polystyrene. In some embodiments, the rubber-modified polystyrene has an effective gel content of 10 to 35 percent. Suitable rubber-modified polystyrenes are commercially available as, for example, HIPS3190 from SABIC Innovative Plastics.

The styrenic copolymer can be a hydrogenated block copolymer of an alkenyl aromatic compound and a conjugated diene. For brevity, this component is referred to herein as the "hydrogenated block copolymer". The hydrogenated block copolymer may comprise 10 to 90 weight percent of poly(alkenyl aromatic) content and 90 to 10 weight percent of hydrogenated poly(conjugated diene) content. In some embodiments, the poly(alkenyl aromatic) content is 10 to 45 weight percent, specifically 20 to 40 weight percent. In other embodiments, the poly(alkenyl aromatic) content is greater than 45 weight percent to 90 weight percent, specifically 45 to 80 weight percent. The hydrogenated block copolymer can have a weight average molecular weight of 40,000 to 400,000 atomic mass units. The number average molecular weight and the weight average molecular weight may be determined by gel permeation chromatography and based on comparison to polystyrene standards. In some embodiments, the hydrogenated block copolymer has a weight average molecular weight of 200,000 to 400,000 atomic mass units, specifically 220,000 to 350,000 atomic mass units. In other embodiments, the hydrogenated block copolymer can have a weight average molecular weight of 40,000 to less than 200,000 atomic mass units, specifically 40,000 to 180,000 atomic mass units, more specifically 40,000 to 150,000 atomic mass units.

The alkenyl aromatic monomer used to prepare the hydrogenated block copolymer can have the structure

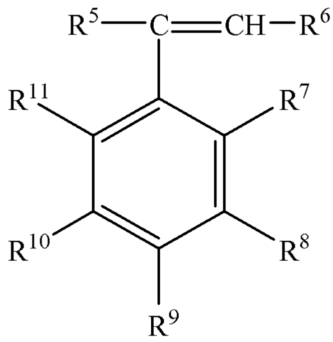

wherein $R^5$ and $R^6$ each independently represent a hydrogen atom, a $C_1$-$C_8$ alkyl group, or a $C_2$-$C_8$ alkenyl group; $R^7$ and $R^{11}$ each independently represent a hydrogen atom, a $C_1$-$C_8$ alkyl group, a chlorine atom, or a bromine atom; and $R^8$, $R^9$, and $R^{10}$ each independently represent a hydrogen atom, a $C_1$-$C_8$ alkyl group, or a $C_2$-$C_8$ alkenyl group, or $R^8$ and $R^9$ are taken together with the central aromatic ring to form a naphthyl group, or $R^9$ and $R^{10}$ are taken together with the central aromatic ring to form a naphthyl group. Specific alkenyl aromatic monomers include, for example, styrene, chlorostyrenes such as p-chlorostyrene, and methylstyrenes such as alpha-methylstyrene and p-methylstyrene. In some embodiments, the alkenyl aromatic monomer is styrene.

The conjugated diene used to prepare the hydrogenated block copolymer can be a $C_4$-$C_{20}$ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In some embodiments, the conjugated diene is 1,3-butadiene, 2-methyl-1,3-butadiene, or a combination thereof. In some embodiments, the conjugated diene consists of 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In some embodiments, the aliphatic unsaturation in the (B) block is reduced by at least 50 percent, specifically at least 70 percent. The arrangement of blocks (A) and (B) includes a linear structure, a grafted structure, and a radial teleblock structure with or without a branched chain. Linear block copolymers include tapered linear structures and non-tapered linear structures. In some embodiments, the hydrogenated block copolymer has a tapered linear structure. In some embodiments, the hydrogenated block copolymer has a non-tapered linear structure. In some embodiments, the hydrogenated block copolymer comprises a B block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of A and B, wherein the molecular weight of each A block may be the same as or different from that of other A blocks, and the molecular weight of each B block may be the same as or different from that of other B blocks. In some embodiments, the hydrogenated block copolymer is a diblock copolymer, a triblock copolymer, or a combination thereof.

In some embodiments, the hydrogenated block copolymer excludes the residue of monomers other than the alkenyl aromatic compound and the conjugated diene. In some embodiments, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms.

In some embodiments, the hydrogenated block copolymer includes the residue of one or more acid functionalizing agents, such as maleic anhydride.

In some embodiments, the hydrogenated block copolymer comprises a polystyrene-poly(ethylene-butylene)-polystyrene triblock copolymer.

In some embodiments, the hydrogenated block copolymer comprises a polystyrene-poly(ethylene-butylene-styrene)-polystyrene triblock copolymer.

In some embodiments, the hydrogenated block copolymer comprises a polystyrene-poly(ethylene-butylene-styrene)-polystyrene triblock copolymer and a polystyrene-poly(ethylene-butylene)-polystyrene triblock copolymer.

Methods for preparing hydrogenated block copolymers are known in the art and many hydrogenated block copolymers are commercially available. Illustrative commercially available hydrogenated block copolymers include the polystyrene-poly(ethylene-propylene) diblock copolymers available from Kraton Polymers as KRATON G1701 and G1702; the polystyrene-poly(ethylene-butylene)-polystyrene triblock copolymers available from Kraton Polymers as KRATON G1641, G1650, G1651, G1654, G1657, G1726, G4609, G4610, GRP-6598, RP-6924, MD-6932M, MD-6933, and MD-6939; the polystyrene-poly(ethylene-butylene-styrene)-polystyrene (S-EB/S-S) triblock copolymers available from Kraton Polymers as KRATON RP-6935 and RP-6936, the polystyrene-poly(ethylene-propylene)-polystyrene triblock copolymers available from Kraton Polymers as KRATON G1730; the maleic anhydride-grafted polystyrene-poly(ethylene-butylene)-polystyrene triblock copolymers available from Kraton Polymers as KRATON G1901, G1924, and MD-6684; the maleic anhydride-grafted polystyrene-poly(ethylene-butylene-styrene)-polystyrene triblock copolymer available from Kraton Polymers as KRATON MD-6670; the polystyrene-poly(ethylene-butylene)-polystyrene triblock copolymer comprising 67 weight percent polystyrene available from Asahi Kasei Elastomer as TUFTEC H1043; the polystyrene-poly(ethylene-butylene)-polystyrene triblock copolymer comprising 42 weight percent polystyrene available from Asahi Kasei Elastomer as TUFTEC H1051; the polystyrene-poly(butadiene-butylene)-polystyrene triblock copolymers available from Asahi Kasei Elastomer as TUFTEC P1000 and P2000; the polystyrene-polybutadiene-poly(styrenebutadiene)-polystyrene block copolymer available from Asahi Kasei Elastomer as S.O.E.-SS L601; the hydrogenated radial block copolymers available from Chevron Phillips Chemical Company as K-Resin KK38, KR01, KR03, and KR05; the polystyrene-poly(ethylene-butylene)-polystyrene triblock copolymer comprising 60 weight polystyrene available from Kuraray as SEPTON S8104; the polystyrene-poly(ethylene-ethylene/propylene)-polystyrene triblock copolymers available from Kuraray as SEPTON S4044, S4055, S4077, and S4099; and the polystyrene-poly(ethylene-propylene)-polystyrene triblock copolymer comprising 65 weight percent polystyrene available from Kuraray as SEPTON S2104. Mixtures of two of more hydrogenated block copolymers may be used.

The styrenic copolymer can be an unhydrogenated block copolymer. The unhydrogenated block copolymer is similar to the hydrogenated block copolymer, except that the residual aliphatic unsaturation in the poly(conjugated diene) block(s) has not been reduced by hydrogenation. Specific unhydrogenated block copolymers include polystyrene-polybutadiene diblock copolymers (SB), polystyrene-polybutadiene-polystyrene triblock copolymers (SBS), polystyrene-polyisoprene diblock copolymers (SI), polystyrene-polyisoprene-polystyrene triblock copolymers (SIS).

Methods for preparing unhydrogenated block copolymers are known in the art and many unhydrogenated block copolymers are commercially available. Illustrative commercially available hydrogenated block copolymers include the polystyrene-polybutadiene-polystyrene triblock copolymers available as KRATON D1101, KRATON D1102, KRATON D1116, KRATON D1118, KRATON D1133, KRATON D 1152, KRATON D1153, KRATON D1155, KRATON D1184, KRATON D1186, KRATON D1189, KRATON D1191, KRATON D1192, and KRATON D1193 from Kraton polymers; the polystyrene-polyisoprene-polystyrene triblock copolymers available as KRATON D 1111, KRATON D1113, KRATON D1114, KRATON D1117, KRATON D1119, KRATON D1124, KRATON D1126, KRATON D1160, KRATON D1161, KRATON D1162, KRATON D1163, KRATON D1164, and KRATON D1165 from Kraton Polymers; the polystyrene-polybutadiene-polystyrene triblock copolymers available as TUFPRENE A, TUFPRENE 125, TUFPRENE 126S, ASAPRENE T-411, ASAPRENE T-432, ASAPRENE T437, ASAPRENE T-438, and ASAPRENE T439 from AK Elastomers.

The composition comprises the styrenic polymer in an amount of about 1 to about 40 weight percent, specifically about 2 to about 30 weight percent, more specifically about 3 to about 25 weight percent, still more specifically about 4 to about 20 weight percent, and yet more specifically about 5 to about 17 weight percent

In addition to the poly(arylene ether)-polysiloxane block copolymer reaction product and the styrenic polymer, the composition comprises a flame retardant comprising an organophospate ester. Exemplary organophosphate esters include phosphate esters comprising phenyl groups, substituted phenyl groups, or a combination of phenyl groups and substituted phenyl groups, bis-aryl phosphate esters based upon resorcinol such as, for example, resorcinol bis-diphenylphosphate, as well as those based on bisphenols such as, for example, bisphenol A bis-diphenylphosphate. In some embodiments, the organophosphate ester is a triaryl phosphate selected from tris(alkylphenyl) phosphate (for example, CAS No. 89492-23-9 or CAS No. 78-33-1), resorcinol bis(diphenyl phosphate) (for example, CAS No. 57583-54-7), bisphenol A bis(diphenyl phosphate) (for example, CAS No. 181028-79-5), triphenyl phosphate (for example, CAS No. 115-86-6), tris(isopropylphenyl) phosphate (for example, CAS No. 68937-41-7), and mixtures of two or more of the foregoing organophosphate esters.

In some embodiments the organophosphate ester comprises a bis-aryl phosphate having the structure

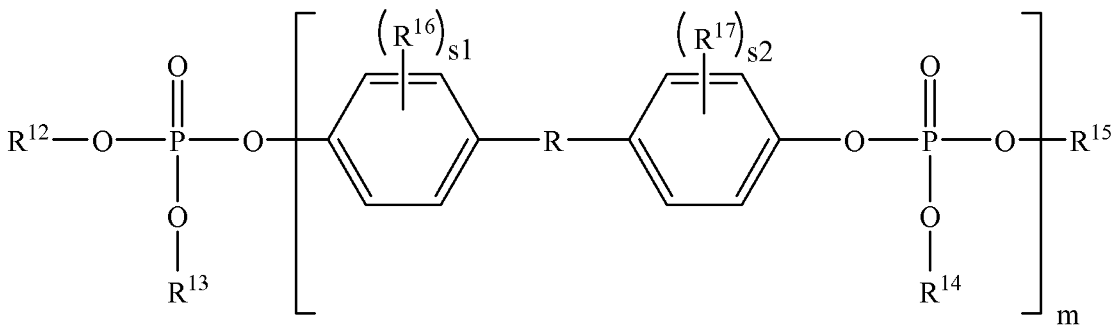

wherein R is independently at each occurrence a $C_1$-$C_{12}$ alkylidene group; $R^{16}$ and $R^{17}$ are independently at each occurrence a $C_1$-$C_5$ alkyl group; $R^{12}$, $R^{13}$, and $R^{15}$ are independently $C_1$-$C_{12}$ hydrocarbyl; $R^{14}$ is independently at each

occurrence $C_1$-$C_{12}$ hydrocarbyl; m is an integer equal to 1 to 25; and s1 and s2 are independently at each occurrence an integer equal to 0, 1, or 2. In some embodiments $OR^5$, $OR^6$, $OR^7$, and $OR^8$ are independently derived from phenol, a monoalkylphenol, a dialkylphenol, or a trialkylphenol.

As readily appreciated by one of ordinary skill in the art, the bis-aryl phosphate is derived from a bisphenol. Exemplary bisphenols include 2,2-bis(4-hydroxyphenyl)propane (so-called bisphenol A), 2,2-bis(4-hydroxy-3-methylphenyl)propane, bis(4-hydroxyphenyl)methane, bis(4-hydroxy-3,5-dimethylphenyl)methane, and 1,1-bis(4-hydroxyphenyl)ethane. In some embodiments, the bisphenol comprises resorcinol, bisphenol A, or a mixture thereof.

In some embodiments, the flame retardant comprises resorcinol bis(diphenyl phosphate), bisphenol A bis(diphenyl phosphate), or a mixture thereof.

In some embodiments, the flame retardant consists of the organophosphate ester.

The composition can comprise the flame retardant in an amount of about 1 to about 40 weight percent, specifically about 3 to about 30 weight percent, more specifically about 5 to about 25 weight percent, still more specifically about 7 to about 20 weight percent, and yet more specifically about 8 to 15 weight percent, based on the total weight of the composition.

In some embodiments, the composition further comprises one or more additives. Such additives include, for example, stabilizers, mold release agents, processing aids, drip retardants, nucleating agents, UV blockers, dyes, pigments, antioxidants, anti-static agents, mineral oil, metal deactivators, antiblocking agents, nanoclays, and electrically conductive agents. When present, the collective amount of all additives is typically about 0.1 to about 10 weight percent, specifically about 0.5 to about 5 weight percent, more specifically about 1 to about 4 weight percent, and still more specifically about 2 to about 4 weight percent, based on the total weight of the composition.

Components not taught herein as required or optional can, optionally, be excluded from the composition. For example, in some embodiments, the composition excludes any polymer other than the poly(arylene ether)-polysiloxane block copolymer reaction product, the hydrogenated block copolymer. In some embodiments, the poly(arylene ether) composition excludes one or more ofpolyamides, polyesters, polyolefins, homopolymers of alkenyl aromatic monomers (such as homopolystyrene), poly(phenylene sulfide)s, unhydrogenated block copolymers of an alkenyl aromatic and a conjugated diene, and rubber-modified polystyrenes. In some embodiments, the composition incorporates about 0.2 to about 2 weight percent of a polyolefin, such as linear low density polyethylene, as a mold release agent.

It is sometimes desirable that the flame retardant is resorcinol bis(diphenyl phosphate) for lower amounts ofpoly(arylene ether)-polysiloxane block copolymer reaction product, and is bisphenol A bis(diphenyl phosphate) for higher amounts of poly(arylene ether)-polysiloxane block copolymer reaction product. Thus, in a specific embodiment, the composition comprises greater than 55 to about 65 weight percent of the poly(arylene ether)-polysiloxane block reaction product, and the flame retardant comprises resorcinol bis(diphenyl phosphate). In another specific embodiment, the composition comprises about 65 to about 95 weight percent of the poly(arylene ether)-polysiloxane block copolymer reaction product, and the flame retardant comprises bisphenol A bis(diphenyl phosphate).

In some embodiments, the composition consists essentially of the poly(arylene ether)-polysiloxane block copolymer, the hydrogenated block copolymer, the flame retardant, and, optionally, about 0.1 to about 10 weight percent, specifically about 0.5 to about 5 weight percent, more specifically about 1 to about 4 weight percent, and still more specifically about 2 to about 4 weight percent, based on the total weight of the composition, of one or more additives selected from the group consisting of stabilizers, mold release agents, processing aids, drip retardants, nucleating agents, UV blockers, dyes, pigments, antioxidants, anti-static agents, blowing agents, mineral oil, metal deactivators, antiblocking agents, nanoclays, and electrically conductive agents. In this context, "consisting essentially of" excludes other components in amounts that adversely affect the improved balance of flame retardancy, melt flow, impact resistance, and heat resistance exhibited by the composition.

In a very specific embodiment, the poly(arylene ether) block comprises arylene ether repeating units having the structure

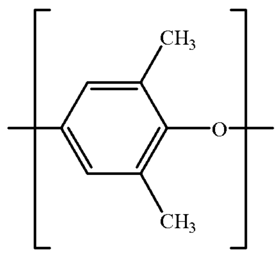;

wherein the polysiloxane block has the structure

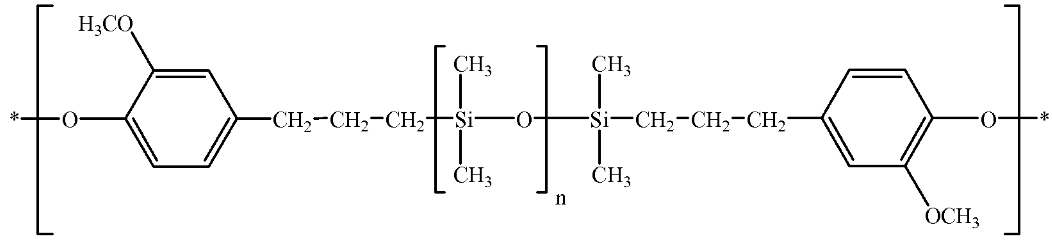

,

and wherein n is about 30 to about 60; the poly(arylene ether)-polysiloxane block copolymer reaction product comprises about 1 to about 8 weight percent siloxane repeating units and about 92 to about 99 weight percent arylene ether repeating units; the composition comprises about 67 to about 87 weight percent of the poly(arylene ether)-polysiloxane block copolymer reaction product; the styrenic polymer consists of the hydrogenated block copolymer of an alkenyl aromatic compound and a conjugated diene; the composition comprises about 5 to about 17 weight percent of the styrenic polymer; the flame retardant comprises resorcinol bis(diphenyl phosphate), bisphenol A bis(diphenyl phosphate), or a mixture thereof; and the composition comprises about 8 to about 15 weight percent of the flame retardant.

The composition can exhibit one or more of a number of advantageous properties. In some embodiments, the composition exhibits a flame retardancy rating of V-0 at a sample thickness of at most 1.5 millimeters, specifically 1.5 millimeters, more specifically 1.0 millimeters, and more specifically 0.8 millimeters, measured according to Underwriter's Laboratory Bulletin 94 "Tests for Flammability of Plastic Materials, UL 94", 20 mm Vertical Burning Test.

In some embodiments, the composition exhibits a notched Izod impact strength of at least 100 joules per meter, specifically at least 100 to about 500 joules per meter, more specifically about 115 to about 450 joules per meter, still more specifically about 120 to about 400 joules per meter, yet more specifically about 150 to about 350 joules per meter, measured at -40°C, a pendulum energy of 2.7 joules, and an impact velocity of 3.5 meters per second according to ASTM D 256-10.

In some embodiments, the composition exhibits a melt mass-flow rate of at least 5 grams per 10 minutes, specifically at least 5 to about 30 grams per 10 minutes, more specifically about 8 to about 28 grams per 10 minutes, more specifically about 10 to about 26 grams per 10 minutes, yet more specifically about 12 to 26 grams per 10 minutes, measured at 300°C, a dwell time of 375 seconds, and a load of 5 kilograms according to ASTM D 1238-10, Procedure B.

In some embodiments, the composition exhibits a heat deflection temperature of at least 90°C, specifically 90 to about 150°C, more specifically about 100 to about 140°C, still more specifically about 105 to about 130°C, measured at a sample thickness of 3.2 millimeters and a stress of 1.82 megapascals according to ASTM D 648-07.

In addition to the above properties individually, the composition can exhibit combinations of advantageous physical properties that were heretofore not observed in poly(arylene ether) compositions. For example, the composition can exhibit combinations of two or more of any of the above-described property values, or combinations of three or more of any of the above-described property values.

For example, in some embodiments, the composition exhibits a flame retardancy performance class of V-0 at a sample thickness of at most 1.5 mm, measured according to Underwriter's Laboratory Bulletin 94 "Tests for Flammability of Plastic Materials, UL 94", 20 mm Vertical Burning Test, and at least two of the three following properties: a notched Izod impact strength of at least 150 joules per meter, measured between -30°C and -40°C using a pendulum energy of 2.7 joules and an impact velocity of 3.5 meters per second according to ASTM D 256-10; a melt mass-flow rate of at least 5 grams per 10 minutes, measured at 300°C, a dwell time of 375 seconds, and a load of 5 kilograms according to ASTM D 1238-10, Procedure B; and a heat deflection temperature of at least 105°C, measured at a sample thickness of 3.2 millimeters and a stress of 1.82 megapascals according to ASTM D 648-07. In some embodiments, the composition exhibits all three of the properties.

the composition exhibits at least two of the following properties: a flame retardancy performance class of V-0 at a sample thickness of at most 1.5 mm, measured according to Underwriter's Laboratory Bulletin 94 "Tests for Flammability of Plastic Materials, UL 94", 20 mm Vertical Burning Test; a notched Izod impact strength of at least 150 joules per meter, measured at -40°C, a pendulum energy of 2.7 joules, and an impact velocity of 3.5 meters per second according to ASTM D 256-10; a melt mass-flow rate of at least 12 grams per 10 minutes, measured at 300°C, a dwell time of 375 seconds, and a load of 5 kilograms according to ASTM D 1238-10, Procedure B; and a heat deflection temperature of at least 105°C, measured at a sample thickness of 3.2 millimeters and a stress of 1.82 megapascals according to ASTM D 648-07. In another embodiment, the composition exhibits at least three of the physical properties listed in this paragraph.

In some embodiments, the composition exhibits a notched Izod impact strength of at least 5 kilojoules per square meter, specifically at least 5 to about 50 kilojoules per square meter, more specifically about 8 to about 45 kilojoules per square meter, still more specifically about 10 to about 40 kilojoules per square meter, yet more specifically about 12 to about 35 kilojoules per square meter, measured at -30°C, a pendulum energy of 5.5 joules according to ISO

180:2000(E).

In some embodiments, the composition exhibits improved multi-axial impact strength, especially in compositions having about 5 weight percent or less of a hydrogenated block copolymers of an alkenyl aromatic compound and a conjugated diene. In some embodiments, the composition exhibits a notched Izod impact strength of at least 5, specifically 5 to about 500, more specifically about 10 to about 500, still more specifically about 15 to about 500, yet more specifically about 20 to about 500, and yet more specifically about 25 to about 500 kilojoules per square meter, measured at -30°C and a pendulum energy of 5.5 joules according to ISO 180:2000(E). In some embodiments, the composition exhibits a notched Izod impact strength of about 100 to about 500 kilojoules per square meter, measured at -40°C and a pendulum energy of 5.5 joules according to ISO 180:2000(E).

The inventive compositions are characterized by a high degree of stiffness, which differentiates them from the compositions of U.S. Patent Application Publication No. US 2010/0139944 A1 of Guo et al., which are flexible compositions intended for use as wire and cable insulation. For example, in some embodiments, the composition exhibits a flexural modulus of at least 1,500 megapascals, specifically at least 1,500 to about 3,000 megapascals, more specifically about 2,000 to about 3,000 megapascals, even more specifically about 2,200 to about 2,600 megapascals, measured at 23°C, a test speed of 1 millimeter per minute, and a sample thickness of 3.2 millimeters in accordance with ASTM D 790-10. This degree of stiffness makes the composition ideally suited for use as a molding composition for rigid articles.

In some embodiments, the composition exhibits a multi-axial impact total energy of at least 20 joules, specifically 20 to about 70 joules, more specifically about 30 to about 70 joules, still more specifically about 35 to about 70 joules, yet more specifically about 40 to about 70 joules measured at -30°C, a sample thickness of 3.2 millimeters, and an impact velocity of 3.3 meters per second according to ASTM D 3763-06.

The composition can be formed by melt kneading or melt blending the poly(arylene ether)-polysiloxane block copolymer reaction product, the hydrogenated block copolymer, the flame retardant, and any optional components. Melt-kneading devices are known in the art and include single-screw, twin-screw, and multi-screw type extruders, ribbon blenders, Henschel mixers, Banbury mixers, drum tumblers, single screw extruders, co-kneaders, and similar mixing devices that can apply shear to the components. A specific melt kneading procedure is described in the working examples below.

The composition is ideally suited for forming articles by shaping, extruding, or molding. In particular, articles can be molded from the composition by known processes, such as injection molding, injection compression molding, gas assist injection molding, rotary molding, blow molding, compression molding and related molding processes. A specific injection molding procedure applicable to the compositions is described in the working examples below.

One embodiment is an article injection molded from the composition. The composition is particularly adapted for molding photovoltaic junction boxes and connectors. Photovoltaic junction boxes are generally rectangular, low-profile plastic housings which protect electrical connections against the rigorous challenges of the outdoor environment at various points within a photovoltaic installation, from individual solar energy collection panels into power collection circuits and power management equipment for delivery to a local electrical load circuit or outgoing power transmission lines. These junction boxes may contain a varying number of wiring compartments and may be provided with wiring terminals, connectors, or leads to accommodate current-carrying conductors in a secure manner to assure that reliable reproducible connections can readily be accomplished in the field. Specific configurations for photovoltaic junction boxes and connectors are described in, for example, U.S. Patent No. 7,291,036 B1 to Daily et al.; U.S. Patent No. 7,824,189 to Lauermann et al.; U.S. Patent Application Publication No. US 2010/0218797 A1 of Coyle et al.; and U.S. Patent Application Publication No. US 2010/0294903 A1 of Shmukler et al.

All of the compositional variations describe above apply to the composition itself as well as to an injection molded article comprising the composition.

The invention includes at least the following embodiments.

Embodiment 1: A composition, comprising: greater than 55 to about 95 weight percent of a poly(arylene ether)-polysiloxane block copolymer reaction product comprising a poly(arylene ether) homopolymer, and a poly(arylene ether)-polysiloxane block copolymer comprising a poly(arylene ether) block, and a polysiloxane block comprising, on average, about 20 to about 80 siloxane repeating units; wherein the poly(arylene ether)-polysiloxane block copolymer reaction product comprises about 1 to about 30 weight percent siloxane repeating units and about 70 to about 99 weight percent arylene ether repeating units; wherein the poly(arylene ether)-polysiloxane block copolymer reaction product is the product of a process comprising oxidatively copolymerizing a monomer mixture comprising a monohydric phenol and a hydroxyaryl-terminated polysiloxane; and wherein the poly(arylene ether)-polysiloxane block copolymer reaction product has a weight average molecular weight of at least 30,000 atomic mass units; about 1 to about 40 weight percent of a styrenic polymer selected from the group consisting of rubber-modified polystyrenes, unhydrogenated block copolymers of an alkenyl aromatic compound and a conjugated diene, hydrogenated block copolymers of an alkenyl aromatic compound and a conjugated diene, and mixtures thereof; and about 1 to about 40 weight percent of a flame retardant comprising an organophosphate ester; wherein all weight percents are based on the total weight of the composition, unless a different weight basis is specified; and wherein the composition exhibits a flexural modulus of 1500 to 3000

megapascals, measured at 23°C and a sample thickness of 3.2 millimeters in accordance with ASTM D 790-10.

Embodiment 2: The composition of embodiment 1, comprising about 67 to about 87 weight percent of the poly(arylene ether)-polysiloxane block copolymer reaction product.

Embodiment 3: The composition of embodiment 1 or 2, comprising about 5 to about 17 weight percent of the styrenic polymer.

Embodiment 4: The composition of any of embodiments 1-3, comprising about 8 to about 15 weight percent of the flame retardant.

Embodiment 5: The composition of any of embodiments 1-4, wherein the styrenic polymer consists of the hydrogenated block copolymer of an alkenyl aromatic compound and a conjugated diene.

Embodiment 6: The composition of any of embodiments 1-4, wherein the styrenic polymer consists of the rubber-modified polystyrene and the unhydrogenated block copolymer of an alkenyl aromatic compound and a conjugated diene.

Embodiment 7: The composition of any of embodiments 1-5, wherein the composition comprises greater than 55 to about 65 weight percent of the poly(arylene ether)-polysiloxane block reaction product, and the flame retardant comprises resorcinol bis(diphenyl phosphate).

Embodiment 8: The composition of any of embodiments 1-5, wherein the composition comprises about 65 to about 95 weight percent of the poly(arylene ether)-polysiloxane block copolymer reaction product, and the flame retardant comprises bisphenol A bis(diphenyl phosphate).

Embodiment 9: The composition of any of embodiments 1-8, wherein the poly(arylene ether) block comprises arylene ether repeating units having the structure

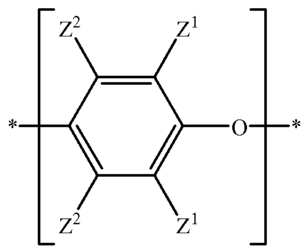

wherein for each repeating unit, each $Z^1$ is independently halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atoms; and each $Z^2$ is independently hydrogen, halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atom; wherein the polysiloxane block comprises repeating units having the structure

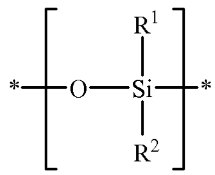

wherein each occurrence of $R^1$ and $R^2$ is independently hydrogen, $C_1$-$C_{12}$ hydrocarbyl or $C_1$-$C_{12}$ halohydrocarbyl; and wherein the polysiloxane block further comprises a terminal unit having the structure

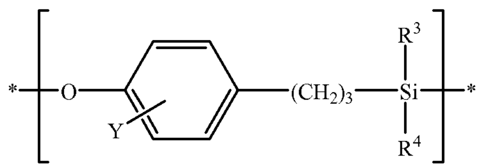

wherein Y is hydrogen, $C_1$-$C_{12}$ hydrocarbyl, $C_1$-$C_{12}$ hydrocarbyloxy, or halogen, and wherein each occurrence of $R^3$ and $R^4$ is independently hydrogen, $C_1$-$C_{12}$ hydrocarbyl or $C_1$-$C_{12}$ halohydrocarbyl.

Embodiment 10: The thermoplastic composition of any of embodiments 1-9, wherein the poly(arylene ether)

block comprises arylene ether repeating units having the structure

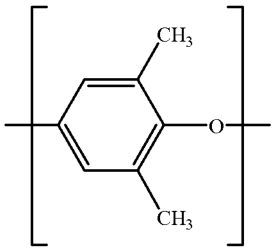

;

and
wherein the polysiloxane block has the structure

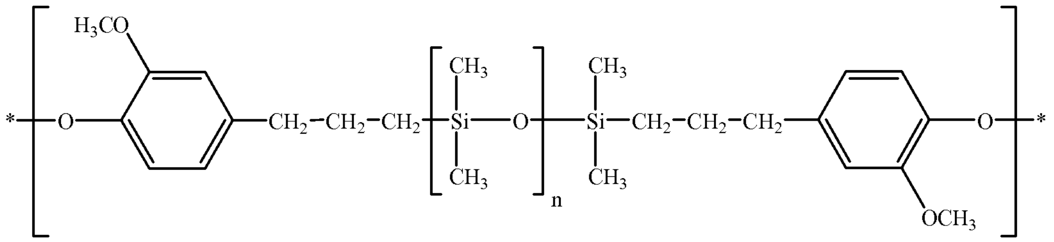

wherein n is about 30 to about 60.

Embodiment 11: The composition of any of embodiments 1-10, wherein the process for forming the poly(arylene ether)-polysiloxane block copolymer reaction product further comprises precipitating an oxidative copolymerization reaction mixture with an antisolvent comprising isopropanol to form the poly(arylene ether)-polysiloxane block copolymer reaction product, and wherein the poly(arylene ether)-polysiloxane block copolymer reaction product comprises less than about 1.5 weight percent of the hydroxyaryl-terminated polysiloxane, based on the total weight of the poly(arylene ether)-polysiloxane block copolymer reaction product.

Embodiment 12: The composition of any of embodiments 1-11, wherein the flame retardant consists of the organophosphate ester.

Embodiment 13: The composition of any of embodiments 1-11, wherein the flame retardant comprises resorcinol bis(diphenyl phosphate), bisphenol A bis(diphenyl phosphate), or a mixture thereof.

Embodiment 14: The composition of any of embodiments 1-12, wherein the composition consists essentially of the poly(arylene ether), the hydrogenated block copolymer, the flame retardant, and, optionally, about 0.1 to about 10 weight percent of one or more additives selected from the group consisting of stabilizers, mold release agents, processing aids, drip retardants, nucleating agents, UV blockers, dyes, pigments, antioxidants, anti-static agents, blowing agents, mineral oil, metal deactivators, antiblocking agents, nanoclays, and electrically conductive agents.

Embodiment 15: The composition of any of embodiments 1-14, wherein the composition exhibits a flame retardancy performance class of V-0 at a sample thickness of at most 1.5 mm, measured according to Underwriter's Laboratory Bulletin 94 "Tests for Flammability of Plastic Materials, UL 94", 20 mm Vertical Burning Test, and at least two of the following properties: a notched Izod impact strength of at least 150 joules per meter, measured between -30°C and -40°C using a pendulum energy of 2.7 joules and an impact velocity of 3.5 meters per second according to ASTM D 256-10; a melt mass-flow rate of at least 5 grams per 10 minutes, measured at 300°C, a dwell time of 375 seconds, and a load of 5 kilograms according to ASTM D 1238-10, Procedure B; and a heat deflection temperature of at least 105°C, measured at a sample thickness of 3.2 millimeters and a stress of 1.82 megapascals according to ASTM D 648-07.

Embodiment 16: The composition of embodiment 15, wherein the composition exhibits all three of the properties.

Embodiment 17: The composition of any of embodiments 1-16, wherein the composition exhibits a flexural modulus of at least 2,000 megapascals, measured at 23°C and a sample thickness of 3.2 millimeters in accordance with ASTM D 790-10.

Embodiment 18: An injection molded article comprising the composition of any of embodiments 1-17.

Embodiment 19: The injection molded article of embodiment 18, wherein the injection molded article is a photovoltaic junction box or a photovoltaic connector.

Embodiment 20: A composition, comprising: about 67 to about 87 weight percent of a poly(arylene ether)-polysiloxane block copolymer reaction product comprising a poly(arylene ether) homopolymer, and a poly(arylene ether)-polysiloxane block copolymer comprising a poly(arylene ether) block, and a polysiloxane block comprising, on average, about

20 to about 80 siloxane repeating units; wherein the poly(arylene ether) block comprises arylene ether repeating units having the structure

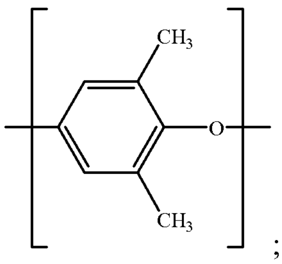

wherein the polysiloxane block has the structure

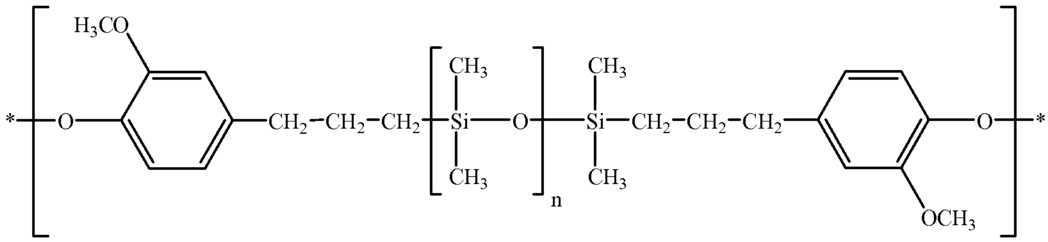

wherein n is about 30 to about 60; wherein the poly(arylene ether)-polysiloxane block copolymer reaction product comprises about 1 to about 8 weight percent siloxane repeating units and about 92 to about 99 weight percent arylene ether repeating units; wherein the poly(arylene ether)-polysiloxane block copolymer reaction product is the product of a process comprising oxidatively copolymerizing a monomer mixture comprising a monohydric phenol and a hydroxyaryl-terminated polysiloxane; and wherein the poly(arylene ether)-polysiloxane block copolymer reaction product has a weight average molecular weight of at least 30,000 atomic mass units; about 5 to about 17 weight percent of a styrenic polymer consisting of a hydrogenated block copolymers of an alkenyl aromatic compound and a conjugated diene; and about 8 to about 15 weight percent of a flame retardant comprising resorcinol bis(diphenyl phosphate), bisphenol A bis(diphenyl phosphate), or a mixture thereof; wherein all weight percents are based on the total weight of the composition, unless a different weight basis is specified.

The invention is further illustrated by the following non-limiting examples.

PREPARATIVE EXAMPLE

The poly(2,6-dimethyl-1,4-phenylene ether)-co-poly(dimethylsiloxane) block copolymer reaction product used in the examples, which had intrinsic viscosity of 0.45 deciliter per gram measured in chloroform at 25°C, was prepared by oxidative copolymerization of a monomer mixture comprising, based on the weight of the monomer mixture, 95 weight percent 2,6-xylenol and 5 weight percent eugenol capped polysiloxane having about 45 siloxane repeat units per molecule. The poly(2,6-dimethyl-1,4-phenylene ether)-co-poly(dimethylsiloxane) block copolymer reaction product was prepared according to the procedure below.

The process is summarized in Table 1, where "Toluene source" refers to whether the toluene solvent is fresh ("Fresh" in Table 1) or recycled ("Recyc." in Table 1) from a poly(arylene ether) homopolymer synthesis; "DMBA level (%)" is the concentration of dimethyl-n-butylamine, expressed as a weight percent relative to the weight of toluene; "Solids (%)" is the weight of total 2,6-dimethylphenol and eugenol-capped polysiloxane, expressed as a weight percent relative to the sum of the weights of 2,6-dimethylphenol, eugenol-capped polysiloxane, and toluene; "Polysiloxane chain length" is the average number of dimethylsiloxane ($-Si(CH_3)_2O-$) units in the eugenol-capped polysiloxane; "Polysiloxane loading (%)" is the weight percent of eugenol-capped polysiloxane in the reaction mixture, based on the total weight of the eugenol-capped polysiloxane and the 2,6-dimethylphenol; "Initial 2,6-dimethylphenol (%)" is the weight percent of 2,6-dimethylphenol present in the reaction vessel at the initiation of polymerization (the introduction of oxygen to the reaction vessel), relative to the total weight of 2,6-dimethylphenol; "O:2,6-dimethylphenol mole ratio" is the mole ratio of atomic oxygen (provided as molecular oxygen) to 2,6-dimethylphenol maintained during the addition of 2,6-dimethylphenol; "Temp., initial charge (°C)" is the temperature, in degrees centigrade, of the reaction mixture when the initial charge of monomer is added to the reaction vessel, and when oxygen is first introduced to the reaction mixture; "Temp., addition (°C)" is the reaction temperature during further addition of 2,6-dimethylphenol; "Temp., build (°C)" is the temperature, expressed in degrees centigrade, during the build phase of the reaction; "Ramp time (min)" is the time, expressed in minutes, during which the temperature was ramped from the addition temperature to the build temperature; "Ramp slope (°C/min)" is the rate of change of temperature, expressed in degrees centigrade per minute, during the period in which the temperature was ramped from the addition temperature to the build temperature; "Reaction time (min)" is the total reaction time, expressed in minutes, elapsed between the moment of oxygen introduction and the moment of oxygen cut-off. For all variations, controlled monomer addition time is 40 to 80 minutes from start of reaction (that is, the initiation of oxygen flow). Build time is measured from the end of controlled monomer addition to the end of reaction (that is, to the termination of oxygen flow); build time was about 80 to 160 minutes.

The following general synthetic procedure was used. The reactor and the 2,6-dimethylphenol addition tank were rinsed with warm toluene that was then discarded. The reaction was purged with nitrogen to achieve an oxygen concentration of less than 1%. The reactor was charged with initial toluene (fresh or recycled), and this toluene was stirred at 500 rotations per minute (rpm). The temperature of the initial toluene was adjusted to the "initial charge" temperature specified in Table 1 and maintained at that temperature during addition of the initial charge of 2,6-dimethylphenol from the addition tank to the reaction vessel. After the addition of the initial charge of 2,6-dimethylphenol was complete, the reaction vessel was charged with the eugenol-capped polydimethylsiloxane, the di-n-butylamine, the dimethyl-n-butylamine, the diamine, and the copper catalyst. Oxygen flow and further monomer addition were initiated, and the oxygen flow was regulated to maintain a headspace concentration less than 17%. During further monomer addition, cooling water supply temperature was adjusted to maintain the temperature specified as "Temp., addition (°C)" in Table 1. After monomer addition was complete, the monomer addition line was flushed with toluene and the reaction temperature was increased to the temperature specified as "Temp., build (°C)" in Table 1. This temperature adjustment was conducted over the time period specified as "Ramp time (min)", and at the rate specified as "Ramp slope (°C/min)" in Table 1. The reaction was continued until a pre-determined time point was reached. The pre-determined end point is the time at which target intrinsic viscosity and maximum siloxane incorporation are attained and is typically 80 to 160 minutes after 2,6-dimethylphenyl addition ends. Once the time point was reached, the oxygen flow was stopped. The reaction mixture was then heated to 60°C and pumped to a chelation tank containing aqueous chelant solution. The resulting mixture was stirred and held at 60°C for one hour. The light (organic) and heavy (aqueous) phases were separated by decantation, and the heavy phase was discarded. A small portion of the light phase was sampled and precipitated with isopropanol for analysis, and the remainder of the light phase was pumped to a precipitation tank and combined with methanol antisolvent (for which isopropanol antisolvent can be substituted) in a weight ratio of 3 parts antisolvent to 1 part light phase. The precipitate was filtered to form a wet cake, which was reslurried three times with the same antisolvent and dried under nitrogen until a toluene concentration less than 1 weight percent was obtained.

Properties of resulting products are summarized in Table 1. "Total volatiles (%)", which is weight percent of volatiles in the isolated product, was determined by measuring the percent weight loss accompanying drying for 1 hour at 110°C under vacuum; "Residual Cu (ppm)", which is the residual catalyst concentration expressed as parts per million by weight of elemental copper, was determined by atomic absorption spectroscopy; for properties as a function of reaction time, samples were removed from the reactor and precipitated (without prior chelation of catalyst metal) by addition of one volume of reaction mixture to three volumes of room temperature isopropanol to yield a precipitate that was filtered, washed with isopropanol, and dried prior to $^1$H NMR (to determine weight percent siloxane and siloxane incorporation efficiency) and intrinsic viscosity analyses.

Number average molecular weight and weight average molecular weight were determined by gel permeation chromatography as follows. The gel permeation chromatograph is calibrated using eight polystyrene standards, each of narrow molecular weight distribution and collectively spanning a molecular weight range of 3,000 to 1,000,000 grams/mole. The columns used were 1,000 and 100,000 Angstrom PLgel columns with a 5 microliter 100 angstrom PLgel guard column. Chromatography was conducted at 25°C. The elution liquid was chloroform with 100 parts per million by weight di-n-butylamine. The elution flow was 1.2 milliliters per minute. The detector wavelength was 254 nanometers. A third degree polynomial function is fitted through the calibration points. Experimental samples are prepared by dissolving 0.27 grams isolated block copolymer reaction product solid in 45 milliliters toluene. A 50 microliter sample of the resulting solution is injected into the chromatograph. The values of number average molecular weight ($M_n$) and weight average molecular weight ($M_w$) are calculated from the measured signal using the polystyrene calibration line. The values are subsequently converted from polystyrene molecular weight to poly(2,6-dimethyl-1,4-phenylene ether) molecular weights using the equation $M(PPE) = 0.3122 \times M(PS)^{1.073}$, where M(PPE) is poly(2,6-dimethyl-1,4-phenylene ether) molecular weight and M(PS) is polystyrene molecular weight.

In Table 1, "Mol. Wt. <10K (%)" is the weight percent of the isolated reaction product having a molecular weight less than 10,000 atomic mass units, as determined by gel permeation chromatography; "Mol. Wt. >100K (%)" is the weight percent of the isolated reaction product having a molecular weight less than 10,000 atomic mass units, as determined by gel permeation chromatography; "IV, end of rxn. (dL/g)" is the intrinsic viscosity, expressed in deciliters per gram and measured by Ubbelohde viscometer at 25°C in chloroform, of dried powder isolated by precipitation from isopropanol; "IV, end of cheln. (dL/g)" is the intrinsic viscosity, expressed in deciliters per gram and measured by Ubbelohde viscometer at 25°C in chloroform, of the product present in the post-chelation organic phase which has been isolated by precipitation from isopropanol then dried; "$M_w$, end of rxn. (AMU)" is the weight average molecular weight, expressed in atomic mass units and measured by gel permeation chromatography, of the product present in the reaction mixture at the end of the polymerization reaction which has been isolated by precipitation from isopropanol then dried; "$M_n$, end of rxn. (AMU)" is the number average molecular weight, expressed in atomic mass units and measured by gel permeation chromatography, of the product present in the reaction mixture at the end of the polymerization reaction which has been isolated by precipitation from isopropanol then dried; "$M_w/M_n$, end of rxn." is the ratio of weight average molecular weight to number average molecular weight for the product present in the reaction mixture at the end of the polymerization reaction which has been isolated by precipitation from isopropanol then dried; "$M_w$, end of cheln. (AMU)" is the weight average molecular weight, expressed in atomic mass units and measured by gel permeation chromatography, of the product present in the post-chelation organic phase which has been isolated by precipitation from isopropanol then dried; "$M_n$, end of cheln. (AMU)" is the number average molecular weight, expressed in atomic mass units and measured by gel permeation chromatography, of the product present in the post-chelation organic phase which has been isolated by precipitation from isopropanol then dried; "$M_w/M_n$, end of cheln." is the ratio of weight average molecular weight to number average molecular weight for the product present in the post-chelation organic phase which has been isolated by precipitation from isopropanol then dried.

In Table 1, "Weight % siloxane (%)" is the weight percent of dimethylsiloxane units in the isolated product, based on the total weight of 2,6-dimethyl-1,4-phenylene ether units and dimethylsiloxane units in the isolated product., as determined by $^1$H NMR using protons labeled ***a*** and ***b*** in the structure labeled "Formula (I)", below, and calculated as

$$Weight\%Siloxane_in_product = \frac{X}{X+Y} \times 100$$

where

$$X = \frac{Peak"b"\,Integral@0.6ppm \times Mn\,Siloxane\,Fluid}{proton\,per\,Siloxane\,Chain},$$

and

$$Y = \frac{Peak"a"\,Integral@6.47ppm \times MW\;2{,}6xylenol}{2}$$

where *"Mn Siloxane Fluid"* in the equation for *X* is the number average molecular weight of the dimethylsiloxane units in the hydroxyaryl-terminated polysiloxane, and "*MW 2,6xylenol*" in the equation for *Y* is the molecular weight of 2,6-dimethylphenol. Calling this metric "Weight % siloxane" is an oversimplification in that it neglects isolated product constituents other than the 2,6-dimethyl-1,4-phenylene ether units and dimethylsiloxane units. Nevertheless, it is a useful metric.

In Table 1, "Siloxane Incorporation Efficiency (%)" is the weight percent of dimethylsiloxane units in the isolated product compared to the weight percent of dimethylsiloxane units in the total monomer composition used in the reaction mixture (the precipitation from isopropanol removes unreacted (unincorporated) siloxane macromer), as determined by $^1$H NMR using protons labeled ***a*** and ***b*** in the structure labeled "Formula (I)", and calculated as

$$Siloxane_Incorporation_Efficiency_(\%) = \frac{Weight\%Siloxane_in_product}{\%Siloxane\,Loaded} \times 100$$

where the equation for *Weight%Siloxane_in_product* is given above, and

$$\%Siloxane\,Loaded = \frac{Weight\,of\;Siloxane\,Monomer\,Loaded}{Weight\,of\;Siloxane\,Monomer\,Loaded + Weight\,of\;2{,}6\,Monomer\,Loaded} \times 100$$

where *"Weight of Siloxane Monomer Loaded"* is the weight of hydroxyaryl-terminated polysiloxane used in the reaction mixture, and *"Weight of 2, 6 Monomer Loaded"* is the total weight of 2,6-dimethylphenol used in the reaction mixture.

Calling this metric "Siloxane Incorporation Efficiency" is an oversimplification in that it neglects the possibility that small amounts of monomers and oligomers may be lost in the isolation process. For example, it is theoretically possible for the Siloxane Incorporation Efficiency to exceed 100% if all of the hydroxyaryl-terminated polysiloxane is incorporated into block copolymer, and some arylene ether oligomers are lost in the isolation procedure. Nevertheless, Siloxane Incorporation Efficiency is a useful metric.

In Table 1, "Tail (%)" refers to the percent of 2,6-dimethylphenol that are in an end group configuration compared to total 2,6-dimethylphenol residues and is determined by $^1H$ NMR using the "tail" protons labeled ***e*** in the structure labeled "Formula (III)" below, and the protons labeled ***a*** in the structure labeled "Formula (I)" below, and calculated as

$$\%Tail = \frac{Z}{Z+Y} \times 100$$

where the equation for *Y* is above, and

$$Z = \frac{Peak\,"e"\,Integral\,@\,7.09\,ppm \times MW\ of\ 2{,}6xylenol}{3}.$$

In Table 2, "Biphenyl (%)" is the weight percent of 3,3',5,5'-tetramethyl-4,4'-biphenol residues, that is, residues having the structure

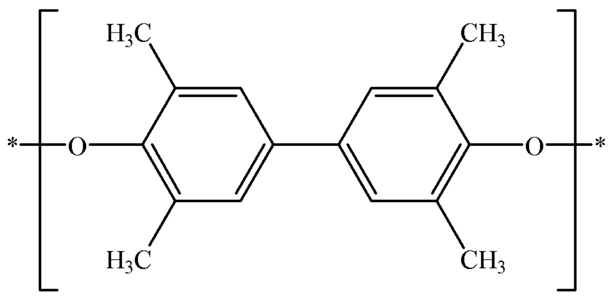

and is determined by $^1H$ NMR using the "biphenyl" protons labeled ***d*** in the structure labeled "Formula (II)", below, and the protons labeled ***a*** in the structure labeled "Formula (I)", and calculated as

$$\%Biphenyl = \frac{W}{W+Y} \times 100$$

where the equation for *Y* is above, and

$$W = \frac{Peak\,"d"\,Integral\,@\,7.35\,ppm \times MW\ biphenyl}{4}$$

wherein *"MW biphenyl"* is the molecular weight of the residue of 3,3',5,5'-tetramethyl-4,4'-biphenol shown above.

"OH (ppm)" is the parts per million by weight of all hydroxyl groups, based on the total weight of the isolated sample, as determined by $^{31}P$ NMR after phosphorus derivatization of the hydroxyl groups of the isolated sample as described in K. P. Chan et al., "Facile Quantitative Analysis of Hydroxyl End Groups of Poly(2,6-dimethyl-1,4-phenylene oxide)s by 31P NMR Spectroscopy", Macromolecules, volume 27, pages 6371-6375 (1994).

Formula (I):

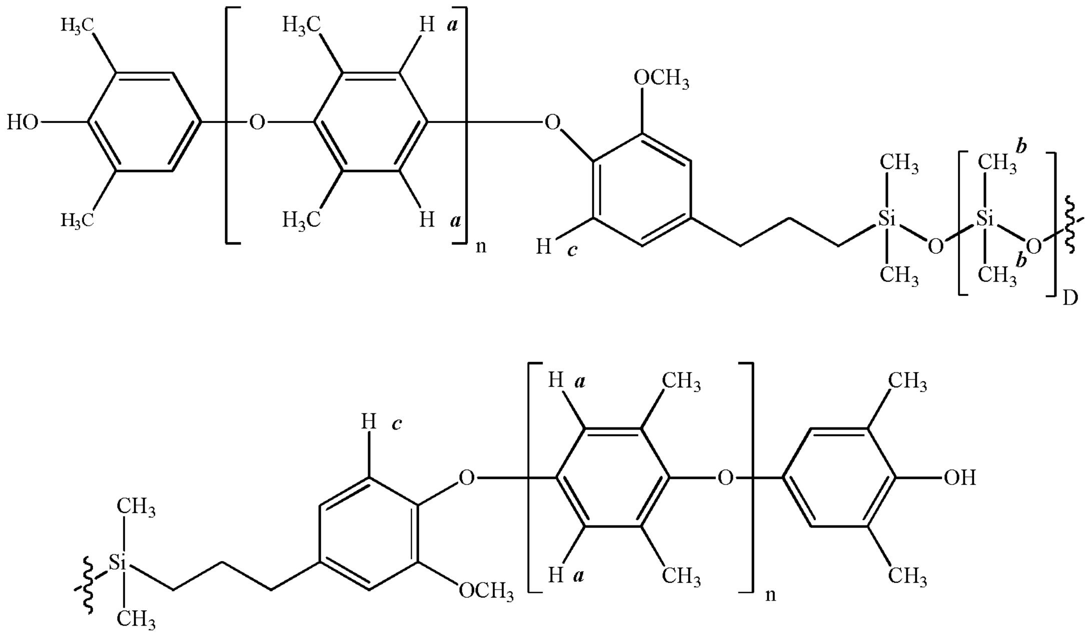

Formula (II):

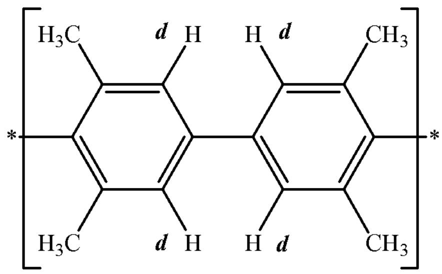

Formula (III):

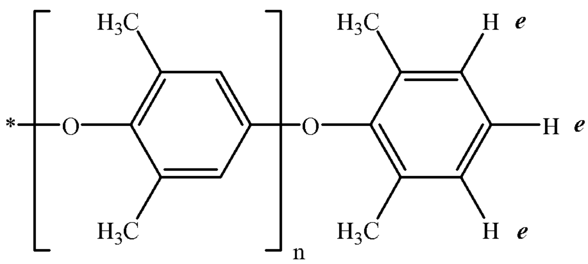

Table 1

| | P. Ex. |
|---|---|
| REACTION CONDITIONS | |
| Toluene Source | Recyc. |
| DMBA level (%) | 2.4 |

(continued)

| | P. Ex. |
|---|---|
| REACTION CONDITIONS | |
| Solids (%) | 23 |
| Polysiloxane chain length | 45 |
| Polysiloxane loading (%) | 5 |
| Initial 2,6-DMP (%) | 7.9 |
| O:2,6-DMP mole ratio | 0.98 |
| Catalyst (%) | 0.75 |
| Temp., initial charge (°C) | 21 |
| Temp., addition (°C) | 38 |
| Temp., build (°C) | 49 |
| Ramp time (min) | 30 |
| Ramp slope (°C/min) | 0.37 |
| Reaction time (min) | 200 |
| FINAL PRODUCT PROPERTIES | |
| Mol. Wt. <10K (%) | 12 |
| Mol. Wt. >100K (%) | 12 |
| IV, end of rxn. (dL/g) | 0.40 |
| IV, end of cheln. (dL/g) | 0.36 |
| $M_w$, end of rxn. (AMU) | 58000 |
| $M_n$, end of rxn. (AMU) | 24000 |
| $M_w/M_n$, end of rxn. | 2.4 |
| $M_w$, end of cheln. (AMU) | 50000 |
| $M_n$, end of cheln. (AMU) | 19000 |
| $M_w/M_n$, end of cheln. | 2.6 |
| Weight % siloxane (%) | 4.77 |
| Silox. Incorp. Effic. (%) | 95 |
| Weight % Biphenyl (%) | 1.26 |
| Total OH (ppm) | 1532 |
| Total volatiles (%) | - |
| Residual Cu (ppm) | - |
| Wt. % siloxane, 80 min (%) | 0.17 |
| Wt. % siloxane, 110 min (%) | 3.67 |
| Wt. % siloxane, 200 min (%) | 4.64 |
| Silox. Incorp. Effic., 80 min (%) | 3.34 |
| Silox. Incorp. Effic., 110 min (%) | 73.33 |
| Silox. Incorp. Effic., 200 min (%) | 92.81 |
| IV, 80 min (dL/g) | 0.06 |
| IV, 110 min (dL/g) | 0.12 |

(continued)

| FINAL PRODUCT PROPERTIES | |
|---|---|
| IV, 200 min (dL/g) | 0.40 |

For characterization of the Preparative Example composition as a function of molecular weight fraction, fractions from six gel permeation chromatography injections (36 milligrams of total material injected) were collected using a Gilson fraction collector. The effluent eluting between 12 and 25 minutes run time was divided into 60 test tubes which were later recombined to give 6 fractions with each contained approximately 16.67% of the total material (determined from area percent of the chromatogram). A small part (200 microliters) of the five fractions was analyzed by gel permeation chromatography to confirm the success of the fractionation. The remaining part was used for $^1H$ NMR analysis. The portion used for NMR analysis was evaporated to dryness at 50°C under a nitrogen flow. One milliliter of deuterated chloroform (with tetramethylsilane as internal standard) was added and the samples were analyzed by 1H NMR. The results, presented in Table 2, show, first, that all fractions contain substantial dimethylsiloxane content. The fact that no "% tail" was detected in the highest molecular weight fraction indicates that this fraction is essentially free of poly(arylene ether) homopolymer; that is, it is essentially pure block copolymer. Similarly, the fact that the largest "% tail" was observed in the lowest molecular weight fraction means that the poly(arylene ether) is biased toward the lower molecular weight fractions.

Table 2

| Sample description | Siloxane weight (%) | Biphenyl weight (%) | Tail Weight (%) |
|---|---|---|---|
| Fraction 1 (83-100% of MW curve; highest MW fraction) | 4.39 | 0.56 | 0.00 |
| Fraction-02 (67-83% of MW curve) | 4.18 | 0.85 | 0.00 |
| Fraction-03 (50-67% of MW curve) | 4.34 | 0.87 | 0.00 |
| Fraction-04 (33-50% of MW curve) | 4.71 | 1.16 | 0.09 |
| Fraction-05 (17-33% of MW curve) | 5.27 | 1.61 | 0.19 |
| Fraction-06 (0-17% of MW curve; lowest Mw fraction) | 6.90 | 3.40 | 1.00 |

EXAMPLES 1-26 AND COMPARATIVE EXAMPLES 1-22

The examples illustrate the improved properties obtained by substituting a poly(arylene ether)-polysiloxane block copolymer reaction product for a poly(arylene ether). In some examples, the amounts of the components in an example and the corresponding comparative example are the same. In other examples, the amounts of the components are different, thus achieving an advantageous balance of the various physical properties. Individual components used to prepare the compositions in the working examples are characterized in Table 3. Non-chemical abbreviations used in the working examples are summarized in Table 4.

Table 3

| Material | Description |
|---|---|
| PPE, 0.46 IV | Poly(2,6-dimethyl-1,4-phenylene ether), CAS Reg. No. 25134-01-4, having an intrinsic viscosity of 0.46 deciliter per gram measured in chloroform at 25°C and a weight average molecular weight of 59,000 atomic mass units; obtained as PPO 646 from SABIC Innovative Plastics |
| PPE, 0.40 IV | Poly(2,6-dimethyl-1,4-phenylene ether), CAS Reg. No. 25134-01-4, having an intrinsic viscosity of 0.40 deciliter per gram measured in chloroform at 25°C; a weight average molecular weight of 55,000 atomic mass units; obtained as PPO 640 from SABIC Innovative Plastics |

(continued)

| Material | Description |
|---|---|
| PPE-Si5% | Poly(2,6-dimethyl-1,4-phenylene ether)-co-poly(dimethylsiloxane) block copolymer reaction product, having an intrinsic viscosity of 0.39 - 0.45 deciliter per gram measured in chloroform at 25°C; prepared from 95 weight percent 2,6-xylenol and 5 weight percent eugenol capped polysiloxane; prepared as described in the Preparative Example. |
| SEBS | High molecular weight polystyrene-poly(ethylene/butylene)-polystyrene triblock copolymer, CAS Reg. No. 66070-58-4, having a polystyrene content of 30.0 to 33.0 weight percent and a weight average molecular weight of 240,000-301,000; obtained as KRATON G1651 from Kraton Polymers. |
| SEBS-1 | Poly(styrene-ethylene/butylene-styrene) triblock copolymer, CAS Reg. No. 66070-58-4, having a polystyrene content of 40 weight percent, obtained as KRATON RP693 6 from Kraton Polymers Ltd. |
| TPE | Thermoplastic elastomer containing polystyrene-poly(ethylene/butylene)-polystyrene triblock copolymer (CAS Reg. No. 66070-58-4), polystyrene-poly(ethylene/propylene)-polystyrene triblock copolymer (CAS Reg. No. 68648-89-5), propylene homopolymer (CAS Reg. No. 9003-07-0), ethylene-propylene copolymer (CAS. Reg. No. 9010-79-1), mineral oil (CAS Reg. No. 72623-83-7), and calcium carbonate (CAS Reg. No. 471-34-1); obtained as Sumitomo TPE-SB 2400 from Sumitomo Chemical Co., Ltd. |
| Polybutene | Polybutene, CAS Reg. No. 9003-29-6, having a number average molecular weight of 800 grams per mole, a polydispersity index of 1.60; obtained as INDOPOL H-50 from BP Chemical. |
| BPADP | Bisphenol A bis(diphenyl phosphate), CAS Reg. No. 181028-79-5; obtained as FYROLFLEX BDP from Supresta LLC, or REOFOS BAPP from Great Lakes Chemical Co. Ltd. |
| RDP | Resorcinol bis(diphenyl phosphate), CAS Reg. No. 57583-54-7; obtained as FYROLFLEX RDP from Supresta LLC. or REOFOS RDP from Great Lakes Chemical Co. Ltd. |
| TCP | Tricalcium phosphate CAS Reg. No. 1306-06-5, obtained as C 13-09 from Budenheim USA |
| TSAN | Poly(styrene-acrylonitrile)-encapsulated polytetrafluoroethylene, CAS Reg. No. 9002-84-0, containing 50 weight percent polytetrafluoroethylene; obtained as F449 Encapsulated PTFE from SABIC Innovative Plastics. |
| PSAL | Polysalicylate acetate, CAS Reg. No. 125542-70-3, having a molecular weight of at least 2,000 atomic mass units, obtained from Proviron Fine Chemicals. |
| F88 | Ethylene glycol-propylene glycol block copolymer, CAS Reg. No. 691397-13-4, having an average molecular weight of 11,400; obtained as PLURONIC F88 from BASF Corp. |
| MgO | Magnesium oxide, CAS Reg. No. 1309-48-4; obtained as ELASTOMAG 170 from Western Reserve. |
| ZnS | Zinc sulfide, CAS Reg. No. 1314-98-3; obtained as SACHTOLITH HD, from Sachtleben Corp. |
| ZnO | Zinc oxide, CAS Reg. No. 1314-13-2; obtained as Zinc Oxide CR-4 from G.H. Chemical. |
| TiO2 | Titanium dioxide, CAS Reg. No. 13463-67-7, having an average particle size of 0.4 micrometer; obtained as CR834 from Tronox LLC |
| CB | Carbon black (pigment); pH = 7.85; heating loss = 1.87 weight percent; sulfur = 0.45 weight percent; iodine absorption = 230.8 grams/kilogram; toluene discoloration number = 99.5 percent transmittance; solvent extractables = 0.01 weight percent; volatile constituents = 1.85 weight percent; obtained as Monarch 800 from Cabot Corp. |
| AO-1 | Pentaerythritol tetrakis(beta-lauryl thiopropionate), CAS Reg. No. 29598-76-3; obtained as SEENOX 412S from Shipro Kasei Kaisha. |
| AO-2 | Tris(2,4-di-tert-butylphenyl) phosphite, CAS Reg. No. 31570-04-4; obtained as MARK 2112 from Chemtura Corp. or as IRGAFOS 168 from BASF Corp. |
| AO-3 | Pentaerythritol 3-(4-hydroxy-3,5-di-tert-butylphenyl)propionate (1:4), CAS Reg. No. 6683-19-8; obtained as IRGANOX 1010 from BASF Corp. |

Table 4. List of Non-chemical Abbreviations

| | |
|---|---|
| Avg. | Average |
| F | Fail |
| C. Ex. | Comparative Example |
| CAS Reg. No. | Chemical Abstracts Service Registry Number |
| Ex. | Example |
| FOT | Flame Out Time |
| HDT | Heat Deflection Temperature |
| IV | Intrinsic Viscosity |
| Max. | Maximum |
| MFR | Melt Mass-Flow Rate |
| MVR | Melt Volume-Flow Rate |
| N | No |
| P | Pass |
| RH | Relative Humidity |
| VST | Vicat Softening Temperature |
| Y | Yes |

Inventive and comparative compositions are summarized in Tables 5-14, wherein all component amounts are in parts by weight. The compositions were prepared from individual components as follows. Components were compounded in a 30 millimeter internal diameter twin-screw extruder operating at 300 rotations per minute with barrel temperatures of 240 to 290°C from feedthroat to die. All components except for the flame retardant were added at the feedthroat of the extruder. The aryl phosphate flame retardant (BPADP or RDP) was added downstream via a liquid injector in the second half of the extruder. The extrudate was pelletized, and the pellets dried at 80°C for four hours prior to subsequent use for injection molding. The poly(arylene ether) compositions were injection molded into articles for physical testing. Injection molding was conducted on a Van Dorn 120T injection molding machine using barrel temperatures of 530°F (266.7°C) and a mold temperature of 190°F (87.7°C).

Physical properties of parts injection molded from the compositions are summarized in Tables 5-18. Melt mass-flow rate (MFR), expressed in grams per 10 minutes (g/10 min) was measured at 300°C under a load of 5 kilograms (kg) with a dwell time of 375.0 minutes (min) in accordance with ASTM D 1238-10. Melt volume-flow rate (MVR), expressed in cubic centimeters per 10 minutes ($cm^3$/10 min) was measured at 300°C under a load of 5 kilograms (kg) with a dwell time of 375.0 minutes (min), also in accordance with ASTM D 1238-10. Heat deflection temperature (HDT), expressed in degrees Centigrade (°C), was measured at a stress of 1.82 megapascals (MPa) and a sample thickness of 3.2 millimeters (mm) in accordance with ASTM D 648-07, or it was measured at a stress of 1.8 MPa, a sample thickness of 4.0 mm, and a flat-wise sample orientation in accordance with ISO 75-1:2004, Method A. Vicat Softening Temperature (VST), expressed in degrees Centigrade (°C), was measured at a force of 50 Newtons (N) and a heating rate of 120 degrees Centigrade per hour (°C/hr), in accordance with ISO 306:2004(E). Elastic modulus was measured at 23°C and a test speed of 1 mm/min. Stress at yield, and stress at break, all expressed in megapascals (MPa), and strain at break and strain at yield, expressed in percent, were measured at 23°C at a test velocity of 50.0 millimeters per minute (mm/min) according to ISO 527-5:1997(E). Flexural modulus, expressed in megapascals (MPa), was measured at 23°C in accordance with ASTM D 790-10. Notched Izod Impact Strength, when expressed in joules per meter (J/m), was measured at 23°C, -30°C, or -40°C, with a pendulum energy of 2.7 joules (J) and an impact velocity of 3.5 meters per second (m/sec), in accordance with ASTM D 256-10. Notched Izod Impact Strength, when expressed in kilojoules per square meter (kJ/$m^2$), was measured at 23°C or -30°C, with a pendulum energy of 2.75 or 5.5 joules (J), in accordance with ISO 180:2000(E). Multi-axial Impact Strength, expressed in joules (J), was measured at 23°C or -30°C, at a sample thickness of 3.2 millimeters (mm) and with an impact velocity of 3.3 meters per second (m/sec), in accordance with ASTM D 3763-06. Flammability properties were measured at sample thicknesses of 0.8, 1.0, 1.5, or 3.0 millimeters (mm), according to Underwriter's Laboratory Bulletin 94 "Tests for Flammability of Plastic Materials, UL 94", 20 mm Vertical Burning Flame Test. Results are expressed as performance class (V-0, V-1, or V-2), average first flame out

time, average second flame out time, and average overall flame out time. Flammability properties were also measured on bars 125 millimeters long by 13 millimeters wide by 1.6 millimeters thick, and on 150 millimeter round disks having a thickness of 1.6 millimeter according to Underwriter's Laboratory Bulletin 94 "Tests for Flammability of Plastic Materials, UL 94", 500 W (125 mm) Vertical Burning Flame Test. Results are expressed as performance class 5VA for 5 disks and performance class 5VB for 10 bars.

EXAMPLES 1-6

The compositions and properties of inventive Examples 1-6, comprising polysiloxane block copolymer reaction product, are summarized in Table 5. These examples exhibit a useful combination of properties - a melt mass-flow rate of at least 12.7 grams per 10 minutes; a heat deflection temperature of at least 105°C; a notched Izod impact strength of at least 119 joules per meter, measured at -40°C according to ASTM D 256-10; and a UL 94 performance class of V-0 at a sample thickness of 1.0 millimeter.

Table 5

| | Ex. 1 | Ex. 2 | Ex. 3 | Ex. 4 | Ex. 5 | Ex. 6 |
|---|---|---|---|---|---|---|
| Compositions (Parts by Weight) | | | | | | |
| PPE-Si5% | 80.15 | 76.15 | 69.15 | 84.15 | 78.15 | 71.15 |
| SEBS | 6 | 12 | 16 | 6 | 12 | 16 |
| BPADP | 13 | 11 | 14 | - | - | - |
| RDP | - | - | - | 9 | 9 | 12 |
| TSAN | 0.05 | 0.05 | 0.05 | 0.05 | 0.05 | 0.05 |
| MgO | 0.15 | 0.15 | 0.15 | 0.15 | 0.15 | 0.15 |
| ZnS | 0.15 | 0.15 | 0.15 | 0.15 | 0.15 | 0.15 |
| CB | 0.5 | 0.5 | 0.5 | 0.5 | 0.5 | 0.5 |
| AO-2 | 0.5 | 0.5 | 0.5 | 0.5 | 0.5 | 0.5 |
| Total | 100.5 | 100.5 | 100.5 | 100.5 | 100.5 | 100.5 |
| Properties | | | | | | |
| MFR, 300°C, 5 kg, 375 sec, Avg. (g/10 min) | 23.9 | 14.6 | 20.2 | 16.0 | 12.7 | 17.9 |
| HDT, 1.82 MPa, 3.2 mm, Avg. (°C) | 121 | 122 | 106 | 129 | 122 | 105 |
| Flexural Modulus, Avg. (MPa) | 2,550 | 2,250 | 2,120 | 2,430 | 2,180 | 2,020 |
| Notched Izod Impact Strength, ASTM D 256-10, Pendulum Energy = 2.7 J, Impact Velocity = 3.5 m/sec | | | | | | |
| 23°C, Avg. (J/m) | 421 | 548 | 572 | 438 | 564 | 662 |
| -40°C, Avg. (J/m) | 119 | 194 | 339 | 130 | 205 | 349 |
| Multi-axial Impact<br>Impact Velocity = 6.6 m/sec, Sample Thickness = 3.2 mm | | | | | | |
| Total Energy, 23°C, Avg. (J) | 50 | 42 | 44 | 46 | 42 | 43 |
| Total Energy, -40°C, Avg. (J) | 26 | 47 | 47 | 46 | 44 | 46 |
| UL 94 | | | | | | |
| 20 mm Performance Class, 1.0 mm | V-0 | V-0 | V-0 | V-0 | V-0 | V-0 |
| 20 mm Performance Class, 0.8 mm | V-0 | V-0 | V-0 | V-0 | V-0 | V-1 |
| 5VA, 5-Disk Test, 1.6 mm | P | F | P | P | P | P |
| 5VB, 10-Bar Test, 1.6 mm | P | P | P | P | P | P |

EXAMPLE 7 AND COMPARATIVE EXAMPLE 1

In Table 6, the properties of Comparative Example 1, comprising poly(arylene ether) homopolymer, are compared to those of Example 7, having polysiloxane block copolymer reaction product in place of the poly(arylene ether) homopolymer. Example 7 shows improved melt volume-flow rate, improved notched Izod impact strength, and slightly improved flame retardancy, as measured by the UL 94 first and second flame out times. It is generally possible to improve one of flow, impact strength, and flame retardancy by modification of a poly(arylene ether) homopolymer composition. However, improvement in any two of these properties is typically obtained only by sacrificing the other property. Therefore, it is surprising that all three of these properties can be improved simultaneously by the substitution of a poly(arylene ether)-polysiloxane block copolymer reaction product for a poly(arylene ether) homopolymer, as is observed in Example 7.

Table 6

| | C. Ex 1 | Ex. 7 |
|---|---|---|
| Compositions (Parts by Weight) | | |
| PPE, 0.46 IV | 85.0 | - |
| PPE-Si5% | - | 85.0 |
| SEBS | 6.0 | 6.0 |
| BPADP | 8.5 | 8.5 |
| ZnS | 0.15 | 0.15 |
| MgO | 0.15 | 0.15 |
| AO-2 | 0.2 | 0.2 |
| Total | 100 | 100 |
| Properties | | |
| MVR, 300°C, 5 kg, Avg. ($cm^3$/10 min) | 19.5 | 28.8 |
| Elastic Modulus, 1 mm/min Test Speed, Avg. (MPa) | 2436 | 2352 |
| UL 94, 1.5 mm | | |
| First FOT, Avg. (sec) | 1.6 | 0.9 |
| Second FOT, Avg. (sec) | 2.7 | 1.9 |
| Performance Class | V-0 | V-0 |
| Notched Izod Impact Strength, ASTM D 256-10, Pendulum Energy = 2.7 J, Impact Velocity = 3.5 m/sec | | |
| 23°C, Avg. (J/m) | 247 | 312 |
| -30°C, Avg. (J/m) | 108 | 125 |
| Multi-axial Impact<br>Impact Velocity = 3.3 m/sec, Sample Thickness = 3.2 mm | | |
| Energy, Total, 23°C, Avg. (J) | 55.2 | 46.4 |
| Energy, Total, -30°C, Avg. (J) | 17.4 | 19.7 |

EXAMPLES 8-11 AND COMPARATIVE EXAMPLES 2-5

In Table 7, the properties of Comparative Examples 2-5, comprising poly(arylene ether) homopolymer, are compared to those of Examples 8-12, having polysiloxane block copolymer reaction product in place of the poly(arylene ether) homopolymer. In Examples 8 and 9, the UL 94 rating was increased from V-1 to V-0 at a sample thickness of 1.5 mm. A slight improvement in the flame out times was observed for Example 11 as well. Examples 8, 9, and 11 demonstrate the improvements in flame retardancy that can be achieved when a poly(arylene ether)-polysiloxane block copolymer reaction product is substituted for a poly(arylene ether) homopolymer.

Table 7

| | Ex. 8 | C. Ex. 2 | Ex. 9 | C. Ex. 3 |
|---|---|---|---|---|
| Compositions (Parts by Weight) | | | | |
| PPE, 0.40 IV | - | 89.0 | - | 84.55 |
| PPE-Si5% | 89.0 | - | 84.55 | - |
| SEBS | 6.0 | 6.0 | 5.7 | 5.7 |
| BPADP | 3.00 | 3.00 | 2.85 | 2.85 |
| F88 | 1.0 | 1.0 | 0.95 | 0.95 |
| ZnS | 0.15 | 0.15 | 0.14 | 0.14 |
| ZnO | 0.15 | 0.15 | 0.14 | 0.14 |
| AO-1 | 0.7 | 0.7 | 0.67 | 0.67 |
| TiO2 | 0 | 0 | 5 | 5 |
| Total | 100.0 | 100.0 | 100.0 | 100.0 |
| UL 94, 1.5 mm | | | | |
| First FOT, Avg. (sec) | 2.2 | 2.5 | 3.0 | 2.7 |
| Second FOT, Avg. (sec) | 2.8 | 4.4 | 3.6 | 5.3 |
| Performance Class | V-0 | V-1 | V-0 | V-1 |
| | Ex. 10 | C. Ex. 4 | Ex. 11 | C. Ex. 5 |
| PPE, 0.40 IV | - | 80.1 | - | 80.1 |
| PPE-Si5% | 80.1 | - | 80.1 | - |
| SEBS | 5.4 | 5.4 | 5.4 | 5.4 |
| BPADP | 2.70 | 2.70 | 2.70 | 2.70 |
| F88 | 0.90 | 0.90 | 0.90 | 0.90 |
| ZnS | 0.14 | 0.14 | 10.14 | 10.14 |
| ZnO | 0.14 | 0.14 | 0.14 | 0.14 |
| AO-1 | 0.63 | 0.63 | 0.63 | 0.63 |
| TiO2 | 10 | 10 | 0 | 0 |
| Total | 100.0 | 100.0 | 100.0 | 100.0 |
| UL 94, 1.5 mm | | | | |
| First FOT, Avg. (sec) | 3.8 | 2.6 | 2.2 | 2.4 |
| Second FOT, Avg. (sec) | 4.3 | 3.3 | 3.1 | 3.6 |
| Performance Class | V-1 | V-0 | V-0 | V-0 |

EXAMPLES 12-14 AND COMPARATIVE EXAMPLES 6-8

In Table 8, the properties of Comparative Examples 6-8, comprising poly(arylene ether) homopolymer, are compared to Examples 12-14, having poly(arylene ether)-polysiloxane block copolymer reaction product in place of the poly(arylene ether) homopolymer. These examples all comprise 8.0 parts by weight BDADP flame retardant. At this level of flame retardant, the notched Izod impact strength is improved for the compositions with poly(arylene ether)-polysiloxane block copolymer reaction product compared to those with the poly(arylene ether) homopolymer at both 23 °C and -30°C. Flame retardancy, as measured by UL 94, is also improved for the poly(arylene ether)-polysiloxane block copolymer reaction product compared to the poly(arylene ether) homopolymer. As can be seen from Comparative

Example 6 and Example 12, the -30°C notched Izod impact strength is improved for the composition with poly(arylene ether)-polysiloxane block copolymer reaction product relative to the composition with poly(arylene ether) homopolymer at the lowest level (4.0 parts by weight) of impact modifier (SEBS).

Table 8

| | C. Ex. 6 | C. Ex. 7 | C. Ex. 8 | Ex. 12 | Ex. 13 | Ex. 14 |
|---|---|---|---|---|---|---|
| Compositions (Parts by Weight) | | | | | | |
| PPE, 0.46 IV | 87.0 | 83.0 | 79.0 | - | - | - |
| PPE-Si5% | - | - | - | 87.0 | 83.0 | 79.0 |
| SEBS | 4.0 | 8.0 | 12.0 | 4.0 | 8.0 | 12.0 |
| BPADP | 8.0 | 8.0 | 8.0 | 8.0 | 8.0 | 8.0 |
| TSAN | 0.1 | 0.1 | 0.1 | 0.1 | 0.1 | 0.1 |
| AO-1 | 0.9 | 0.9 | 0.9 | 0.9 | 0.9 | 0.9 |
| Total | 100 | 100 | 100 | 100 | 100 | 100 |
| Properties | | | | | | |
| MFR, 300°C, 5 kg, 375 sec., Avg. (g/10 min) | 8.47 | 7.19 | 7.22 | 4.28 | 3.91 | 3.72 |
| HDT, 1.8 MPa, 4.0 mm, Avg. (°C) | 149 | 144 | 142 | 140 | 137 | 132 |
| VST, 50 N, 120 °C/hr, Avg. (°C) | 172 | 168 | 165 | 164 | 157 | 160 |
| Elastic Modulus, 1 mm/min Test Speed, Avg. (MPa) | 2440 | 2295 | 2136 | 2280 | 2131 | 1992 |
| Notched Izod Impact, ISO 180, Pendulum Energy = 5.5 J | | | | | | |
| 23 °C, Avg. ($kJ/m^2$) | 14.85 | 36.17 | 45.15 | 34.87 | 44.83 | 48.92 |
| -30°C, Avg. ($kJ/m^2$) | 7.43 | 18.6 | 24.32 | 15.76 | 21.98 | 31.63 |
| Multi-axial Impact, ASTM D 3763-06 Sample Thickness = 3.2 mm | | | | | | |
| Energy, Total, 23 °C, 3.3 m/sec Impact Velocity, Avg. (J) | 54.2 | 60.9 | 58.6 | 56.6 | 53.6 | 48.4 |
| Energy, Total, -30 °C, 3.3 m/sec Impact Velocity, Avg. (J) | 21.5 | 62.6 | 55.2 | 53.4 | 56.4 | 50.3 |
| Energy, Total, 23 °C, 6.6 m/sec Impact Velocity, Avg. (J) | 64.1 | 63 | 61.6 | 56.6 | 55.6 | 51.2 |
| UL 94, 1.0 mm | | | | | | |
| FOT, Avg. (sec) | 5.1 | 4.8 | 4.5 | 2.1 | 3.5 | 2.5 |
| Performance Class | V-1 | V-1 | V-0 | V-0 | V-0 | V-0 |

EXAMPLES 15-19 AND COMPARATIVE EXAMPLES 9-11

In Table 9, the properties of Comparative Examples 9-11, comprising poly(arylene ether) homopolymer, are compared to those of Examples 15-17, having poly(arylene ether)-polysiloxane block copolymer reaction product in place of the poly(arylene ether) homopolymer. These examples all comprise 11.0 parts by weight BDADP flame retardant. At this level of flame retardant, the notched Izod impact strength is improved for the compositions with poly(arylene ether)-polysiloxane block copolymer reaction product compared to those with poly(arylene ether) homopolymer at both 23°C and -30°C. Flame retardancy, as measured by UL 94, is comparable for the compositions with poly(arylene ether)-polysiloxane block copolymer reaction product and those with poly(arylene ether) homopolymer. As can be seen from Comparative Example 9 and Example 15, the -30°C notched Izod impact strength is improved for the composition with poly(arylene ether)-polysiloxane block copolymer reaction product relative to that with poly(arylene ether) homopolymer at the lowest level (4.0 parts by weight) of impact modifier (SEBS).

Table 9

| | C. Ex. 9 | C. Ex. 10 | C. Ex. 11 | Ex. 15 | Ex. 16 | Ex. 17 |
|---|---|---|---|---|---|---|
| Compositions (Parts by Weight) | | | | | | |
| PPE, 0.46 IV | 84.0 | 80.0 | 76.0 | - | - | - |
| PPE-Si5% | - | - | - | 84.0 | 80.0 | 76.0 |
| SEBS | 4.0 | 8.0 | 12.0 | 4.0 | 8.0 | 12.0 |
| BPADP | 11.0 | 11.0 | 11.0 | 11.0 | 11.0 | 11.0 |
| TSAN | 0.1 | 0.1 | 0.1 | 0.1 | 0.1 | 0.1 |
| AO-1 | 0.9 | 0.9 | 0.9 | 0.9 | 0.9 | 0.9 |
| Total | 100 | 100 | 100 | 100 | 100 | 100 |
| Properties | | | | | | |
| MFR, 300°C, 5 kg, 375 sec, Avg. (g/10 min) | 12.6 | 11.4 | 10.3 | 7.77 | 6.45 | 5.91 |
| HDT, 1.8 MPa, 3.2 mm, Avg. (°C) | 138 | 134 | 132 | 128 | 126 | 120 |
| VST, 50 N, 120 °C/hr, Avg. (°C) | 161 | 158 | 155 | 153 | 150 | 146 |
| Elastic Modulus, 1 mm/min Test Speed, Avg. (MPa) | 2505 | 2328 | 2170 | 2367 | 2194 | 2051 |
| UL 94 Performance Class, 1.0 mm | V-0 | V-0 | V-0 | V-0 | V-0 | V-0 |
| Notched Izod Impact, ISO 180, Pendulum Energy = 5.5 J | | | | | | |
| 23°C, Avg. (kJ/m$^2$) | 17.55 | 33.91 | 44.54 | 31.56 | 45.3 | 49.39 |
| -30°C, Avg. (kJ/m$^2$) | 7.69 | 16.64 | 24.69 | 13.82 | 21.66 | 30.22 |
| Multi-axial Impact Sample Thickness = 3.2 mm | | | | | | |
| Energy, Total, 23 °C, 3.3 m/sec Impact Velocity, Avg. (J) | 61 | 60.1 | 60.3 | 58.1 | 52.8 | 49.4 |
| Energy, Total, -30 °C, 3.3 m/sec Impact Velocity, Avg. (J) | 23.3 | 57.4 | 58.7 | 56.4 | 54.8 | 52.7 |
| Energy, Total, 23 °C, 6.6 m/sec Impact Velocity, Avg. (J) | 63.8 | 65.3 | 59.4 | 59.6 | 56.7 | 49.5 |

EXAMPLES 18-20 AND COMPARATIVE EXAMPLES 12-14

In Table 10, the properties of Comparative Examples 12-14, comprising poly(arylene ether) homopolymer, are compared to those of Examples 18-20, having poly(arylene ether)-polysiloxane block copolymer reaction product in place of the poly(arylene ether) homopolymer. These examples all comprise 11.0 parts by weight BDADP flame retardant. At this level of flame retardant, the notched Izod impact strength is improved for the compositions with poly(arylene ether)-polysiloxane block copolymer reaction product compared to those with poly(arylene ether) homopolymer at both 23°C and -30°C. Flame retardancy, as measured by UL 94, is comparable for the compositions with poly(arylene ether)-polysiloxane block copolymer reaction product and those with poly(arylene ether) homopolymer. As can be seen from Comparative Example 12 and Example 18, the -30°C notched Izod impact strength is improved for the composition with poly(arylene ether)-polysiloxane block copolymer reaction product relative to the composition with poly(arylene ether) homopolymer at the lowest level (4.0 parts by weight) of impact modifier (SEBS).

Table 10

| | C. Ex. 12 | C. Ex. 13 | C. Ex. 14 | Ex. 18 | Ex. 19 | Ex. 20 |
|---|---|---|---|---|---|---|
| Compositions (Parts by Weight) | | | | | | |
| PPE, 0.46 IV | 81.0 | 77.0 | 73.0 | - | - | - |
| PPE-Si5% | - | - | - | 81.0 | 77.0 | 73.0 |
| SEBS | 4.0 | 8.0 | 12.0 | 4.0 | 8.0 | 12.0 |
| BPADP | 14.0 | 14.0 | 14.0 | 14.0 | 14.0 | 14.0 |

(continued)

| | C. Ex. 12 | C. Ex. 13 | C. Ex. 14 | Ex. 18 | Ex. 19 | Ex. 20 |
|---|---|---|---|---|---|---|
| Compositions (Parts by Weight) | | | | | | |
| TSAN | 0.1 | 0.1 | 0.1 | 0.1 | 0.1 | 0.1 |
| AO-1 | 0.9 | 0.9 | 0.9 | 0.9 | 0.9 | 0.9 |
| Total | 100 | 100 | 100 | 100 | 100 | 100 |
| Flow and Thermal Properties | | | | | | |
| MFR, 300°C, 5 kg, 375 sec, Avg. (g/10 min) | 18.0 | 15.7 | 14.5 | 11.7 | 10.7 | 10.1 |
| HDT, 1.8 MPa, 3.2 mm, Avg. (°C) | 126.47 | 122.2 | 120.6 | 116.93 | 114.97 | 108.47 |
| VST, 50 N, 120 °C/hr, Avg. (°C) | 150.7 | 147.5 | 145.1 | 143.1 | 140.8 | 135.3 |
| Elastic Modulus, 1 mm/min Test Speed, Avg. (MPa) | 2576 | 2390 | 2213 | 2414 | 2248 | 2050 |
| UL 94 Performance Class, 1.0 mm | V-0 | V-0 | V-1 | V-0 | V-0 | V-0 |
| Notched Izod Impact, ISO 180, Pendulum Energy = 5.5 J | | | | | | |
| 23 °C, Avg. ($kJ/m^2$) | 17.44 | 34.23 | 44.65 | 29.8 | 45.58 | 51.54 |
| -30°C, Avg. ($kJ/m^2$) | 7.46 | 14.39 | 24.8 | 12.52 | 19.65 | 28.82 |
| Multi-axial Impact, ASTM D 3763-06 Sample Thickness = 3.2 mm | | | | | | |
| Energy, Total, 23 °C, 3.3 m/sec Impact Velocity, Avg. (J) | 57.6 | 55.3 | 58.3 | 57.5 | 54.8 | 50.2 |
| Energy, Total, 23 °C, 3.3 m/sec Impact Velocity, Avg. (J) | 22.7 | 53.7 | 57.6 | 46.3 | 54.2 | 54.8 |
| Energy, Total, 23 °C, 6.6 m/sec Impact Velocity, Avg. (J) | 61.3 | 60.6 | 59.6 | 59.4 | 55.7 | 51.3 |

EXAMPLES 21-23 AND COMPARATIVE EXAMPLES 15-17

In Table 11, the properties of Comparative Examples 15-17, comprising poly(arylene ether) homopolymer, are compared to those of Examples 21-23, respectively, having poly(arylene ether)-polysiloxane block copolymer reaction product in place of the poly(arylene ether) homopolymer. In Examples 21-23, the amounts of poly(arylene ether)-polysiloxane block copolymer reaction product are increased, and the amounts of impact modifier (SEBS), and flame retardant (BPADP) are reduced, relative to Comparative Examples 15-17, in order to obtain comparable heat deflection temperatures to Comparative Examples 15-17, respectively. Despite the reduced amounts of impact modifier and flame retardant in Examples 21-23, the notched Izod impact strength is increased at both 23°C and -30°C, and the flame retardancy, as measured by average first, second, and total flame out times, is improved (as evidenced by reduced flame out times), relative to Comparative Examples 15-17, respectively.

Table 11

| | Ex. 21 | Ex. 22 | Ex. 23 | C. Ex. 15 | C. Ex. 16 | C. Ex. 17 |
|---|---|---|---|---|---|---|
| Compositions (Parts by Weight) | | | | | | |
| PPE, 0.46IV | - | - | - | 75.9 | 75 | 75 |
| PPE-Si5% | 79.4 | 78.5 | 78.5 | - | - | - |
| SEBS | 8.5 | 8.5 | 8.5 | 10 | 10 | 10 |
| BPADP | 12 | 12 | 12 | 14 | 14 | 14 |
| PSAL | - | - | 2 | - | - | 2 |
| AO-1 | - | 0.9 | 0.9 | - | 0.9 | 0.9 |
| AO-2 | 0.1 | 0.1 | 0.1 | 0.1 | 0.1 | 0.1 |

(continued)

| | Ex. 21 | Ex. 22 | Ex. 23 | C. Ex. 15 | C. Ex. 16 | C. Ex. 17 |
|---|---|---|---|---|---|---|
| Compositions (Parts by Weight) | | | | | | |
| Total | 100 | 100 | 100 | 100 | 100 | 100 |
| Properties | | | | | | |
| HDT, 1.8 MPa, 4.0 mm, Avg. (°C) | 123.8 | 120.0 | 112.0 | 121.3 | 120.1 | 114.1 |
| VST, 50 N, 120 °C/hr, Avg. (°C) | 149 | 144 | 137 | 149 | 145 | 141 |
| Notched Izod Impact. ISO 180, Pendulum Energy = 5.5 J | | | | | | |
| 23°C, Avg. ($kJ/m^2$) | 41 | 42 | 39 | 37 | 35 | 34 |
| -30°C Avg. ($kJ/m^2$) | 16 | 16 | 15 | 12 | 13 | 13 |
| Multi-axial Impact, ASTM D 3763-06, Sample Thickness = 3.2 mm | | | | | | |
| Energy, Total, -30 °C, 3.3 m/sec Impact Velocity, Avg. (J) | 50 | 56 | 55 | 55 | 61 | 59 |
| Energy, Total, -40 °C, 6.6 m/s Impact Velocity, Avg.(J) | 54 | 61 | 44 | 24 | 38 | 51 |
| UL 94, 1.0 mm | | | | | | |
| First FOT, Avg. (sec) | 1.86 | 1.78 | 1.29 | 2.21 | 3.52 | 2.51 |
| Second FOT, Avg. (sec) | 2.92 | 2.34 | 1.84 | 5.22 | 5.83 | 5.04 |

EXAMPLES 24-25 AND COMPARATIVE EXAMPLES 18-19

In Table 12, the properties of Comparative Examples 18 and 19, comprising poly(arylene ether) homopolymer, are compared to those of Examples 24 and 25, respectively, having poly(arylene ether)-polysiloxane block copolymer reaction product in place of the poly(arylene ether) homopolymer. In Examples 24 and 25, the amounts of impact modifier (SEBS) and flame retardant (BPADP) are reduced, and the amounts of poly(arylene ether)-polysiloxane block copolymer reaction product are increased, relative to Comparative Examples 18 and 19, respectively, in order to obtain a similar heat deflection temperature as Comparative Examples 18 and 19. Despite the reduced amounts of impact modifier and flame retardant in Examples 24 and 25, the notched Izod impact strength is increased at both 23°C and -30°C, relative to Comparative Examples 24 and 25, and the flame retardancy, as measured by average first, second, and total flame out times, is comparable.

Table 12

| | Ex. 24 | Ex. 25 | C. Ex. 18 | C. Ex. 19 |
|---|---|---|---|---|
| Compositions (Parts by Weight) | | | | |
| PPE, 0.46 IV | - | - | 78.4 | 75.9 |
| PPE-Si5% | 81.9 | 79.4 | - | - |
| SEBS | 8.5 | 8.5 | 10 | 10 |
| BPADP | 9.5 | 12 | 11.5 | 14 |
| AO-2 | 0.1 | 0.1 | 0.1 | 0.1 |
| Total | 100.5 | 100.5 | 100.5 | 100.5 |
| Properties | | | | |
| MFR, 300°C, 5 kg, 375 sec., Avg. (g/10 min) | 4.0 | 6.0 | 8.9 | 12.9 |
| HDT, 1.82 MPa, 3.2 mm, Avg. (°C) | 135 | 126 | 133 | 126 |
| VST, 50 N, 120°C/h, Avg. (°C) | 160 | 151 | 158 | 151 |
| Elastic Modulus, 1 mm/sec Test Speed, Avg. (MPa) | 2157 | 2194 | 2298 | 2338 |

(continued)

| Notched Izod Impact, ISO 180, Pendulum Energy = 5.5 J | | | | |
|---|---|---|---|---|
| 23°C, Avg. (kJ/m$^2$) | 46 | 47 | 40 | 35 |
| -30°C, Avg. (kJ/m$^2$) | 18.5 | 20.5 | 16.5 | 12.9 |
| UL 94, 1.0 mm fan-gated flame bars, 48 hrs. at 23 °C, 50% RH | | | | |
| First FOT, Avg. (sec) | 2.30 | 1.39 | 2.81 | 2.96 |
| Second FOT, Avg. (sec) | 3.32 | 2.01 | 2.72 | 3.16 |

EXAMPLE 26 AND COMPARATIVE EXAMPLES 20-21

In Table 13, the properties of Comparative Examples 20-21, comprising poly(arylene ether) homopolymer, are compared to those of Example 26, having poly(arylene ether)-polysiloxane block copolymer reaction product in place of the poly(arylene ether) homopolymer. The amount of impact modifier (SEBS) is constant at 6.0 parts by weight in all of these examples. The amount of flame retardant (BPADP) is decreased from 13.5 parts by weight in Comparative Examples 20 and 21 to 11.5 parts by weight in Example 26. The notched Izod impact strength at both 23°C and -30°C of Example 26 is increased relative to Comparative Examples 20 and 21. The ductility (multi-axial impact strength) at -40°C of Example 26 is increased relative to Comparative Examples 20-21. The heat deflection temperature of Example 26 is comparable to those of Comparative Examples 20-21.

Table 13

| | Ex. 26 | C. Ex. 20 | C. Ex. 21 |
|---|---|---|---|
| Compositions (Parts by Weight) | | | |
| PPE, 0.46 IV | - | 80.5 | - |
| PPE, 0.40 IV | - | - | 80.5 |
| PPE-Si5% | 82.5 | - | - |
| SEBS | 6.0 | 6.0 | 6.0 |
| BPADP | 11.5 | 13.5 | 13.5 |
| TCP | 2.0 | 2.0 | 2.0 |
| TSAN | - | 0.05 | 0.05 |
| PSAL | 2.0 | 2.0 | 2.0 |
| ZnS | 0.15 | 0.15 | 0.15 |
| MgO | 0.15 | 0.15 | 0.15 |
| AO-2 | 0.15 | 0.15 | 0.15 |
| AO-3 | 0.15 | 0.15 | 0.15 |
| Total | 104.6 | 104.7 | 104.7 |
| Properties | | | |
| HDT, 1.82 MPa, 3.2 mm, Avg. (°C) | 124 | 125 | 124 |
| Modulus of Elasticity, 1 mm/min Test Speed, Avg. (MPa) | 2256 | 2448 | 2416 |
| Notched Izod Impact Strength, ASTM D 256-10, Pendulum Energy = 2.7 J, Impact Velocity = 6.6 m/sec | | | |
| 23°C, Avg. (J/m) | 373 | 216 | 174 |
| -30°C, Avg. (J/m) | 114 | 90.4 | 79.1 |
| Multi-axial Impact, ASTM D3763, 3.3 m/sec, 3.2 mm | | | |
| Energy, Total, 23°C, Avg.(J) | 49.9 | 54.9 | 48.1 |

(continued)

| Multi-axial Impact, ASTM D3763, 3.3 m/sec, 3.2 mm | | | |
|---|---|---|---|
| Energy, Total, -40°C, Avg.(J) | 25 | 7.76 | 5.53 |

EXAMPLES 2 AND 17, AND COMPARATIVE EXAMPLE 22

In Table 14, Examples 2 and 17 are compared to Comparative Example 22, which is Example 15 from U.S. Patent Application Publication No. US 2010/0139944 A1 of Guo et al. Guo et al. describe wire and cable insulation compositions comprising poly(arylene ether)s and poly(arylene ether)-polysiloxane block copolymers. Example 15 of Guo et al. is substantially different than the inventive compositions herein, as exemplified by Examples 2 and 17, in terms of composition and physical properties. The composition of Guo et al. is limited to 5 to 55 weight percent ofpoly(arylene ether)-polysiloxane block copolymer, as exemplified by Comparative Example 22, having 40 weight percent poly(arylene ether)-polysiloxane block copolymer. The inventive compositions herein comprise greater than 55 to about 95 weight percent poly(arylene ether)-polysiloxane block copolymer, as exemplified by Examples 2 and 17, having 76.15 and 76 weight percent poly(arylene ether)-polysiloxane block copolymer, respectively. The inventive compositions herein, as exemplified by Examples 2 and 17, also exhibit substantially different physical properties than the compositions of Guo et al., as exemplified by Comparative Example 22. Comparative Example 22 has a flexural modulus of only 296 megapascals, compared to 2,250 megapascals for Example 2. Comparative Example 22 has a modulus of elasticity of only 185 megapascals, compared to 2,051 megapascals for Example 17. Thus Comparative Example 22 is a highly flexible composition, which makes it ideally suited for use as wire and cable insulation. However this same flexibility makes the composition unsuitable for use in rigid articles, such as photovoltaic junction boxes and connectors. In contrast, the high flexural modulus and modulus of elasticity of Examples 2 and 17 make these compositions ideally suited for use in rigid articles.

Table 14.

| | Ex. 2 | Ex. 17 | C. Ex. 22 |
|---|---|---|---|
| PPE-Si5% | 76.15 | 76.00 | 40 |
| SEBS | 12 | 12 | - |
| SEBS-I | - | - | 30 |
| TPE | - | - | 10 |
| Polybutene | - | - | 8 |
| BPADP | 11 | 11 | 10 |
| TSAN | 0.05 | 0.10 | - |
| MgO | 0.15 | - | - |
| ZnS | 0.15 | - | - |
| CB | 0.5 | - | - |
| AO-1 | - | 0.9 | - |
| AO-2 | 0.5 | - | - |
| Additives | - | - | 1.75 |
| Total | 100.5 | 100 | 99.75 |
| Flexural Modulus, Avg. (MPa) | 2,250 | - | 296 |
| Modulus of Elasticity, Avg. (MPa) | - | 2,051 | 185 |
| Stress at Break (MPa) | | 47.23 | 16.6 |
| Strain at Break, Avg. (%) | - | 18.26 | 59 |

This written description uses examples to disclose the invention, including the best mode, and also to enable any person skilled in the art to make and use the invention. The patentable scope of the invention is defined by the claims.

## Claims

1. A composition, comprising:

greater than 55 to 95 weight percent of a poly(arylene ether)-polysiloxane block copolymer reaction product comprising

a poly(arylene ether) homopolymer, and
a poly(arylene ether)-polysiloxane block copolymer comprising

a poly(arylene ether) block, and
a polysiloxane block comprising, on average, 20 to 80 siloxane repeating units;

wherein the poly(arylene ether)-polysiloxane block copolymer reaction product comprises 1 to 30 weight percent siloxane repeating units and 70 to 99 weight percent arylene ether repeating units;
wherein the poly(arylene ether)-polysiloxane block copolymer reaction product is the product of a process comprising oxidatively copolymerizing a monomer mixture comprising a monohydric phenol and a hydroxyaryl-terminated polysiloxane; and
wherein the poly(arylene ether)-polysiloxane block copolymer reaction product has a weight average molecular weight of at least 30,000 atomic mass units, measured by gel permeation chromatography against polystyrene standards;

1 to 40 weight percent of a styrenic polymer selected from the group consisting of rubber-modified polystyrenes, unhydrogenated block copolymers of an alkenyl aromatic compound and a conjugated diene, hydrogenated block copolymers of an alkenyl aromatic compound and a conjugated diene, and mixtures thereof; and
1 to 40 weight percent of a flame retardant comprising an organophosphate ester;
wherein all weight percents are based on the total weight of the composition, unless a different weight basis is specified; and
wherein the composition exhibits a flexural modulus of 1500 to 3,000 megapascals, measured at 23°C and a sample thickness of 3.2 millimeters in accordance with ASTMD 790-10.

2. The composition of claim 1, comprising 67 to 87 weight percent of the poly(arylene ether)-polysiloxane block copolymer reaction product;
5 to 17 weight percent of the styrenic polymer; and
8 to 15 weight percent of the flame retardant.

3. The composition of claim 1 or 2, wherein the styrenic polymer consists of the hydrogenated block copolymer of an alkenyl aromatic compound and a conjugated diene; and the flame retardant consists of the organophosphate ester.

4. The composition of claim 1 or 2, wherein the styrenic polymer consists of the rubber-modified polystyrene and the unhydrogenated block copolymer of an alkenyl aromatic compound and a conjugated diene.

5. The composition of any of claims 1-3, wherein the composition comprises greater than 55 to 65 weight percent of the poly(arylene ether)-polysiloxane block reaction product, and the flame retardant comprises resorcinol bis(diphenyl phosphate).

6. The composition of any of claims 1-3, wherein the composition comprises 65 to 95 weight percent of the poly(arylene ether)-polysiloxane block copolymer reaction product, and the flame retardant comprises bisphenol A bis(diphenyl phosphate).

7. The composition of any of claims 1-6,
wherein the poly(arylene ether) block comprises arylene ether repeating units having the structure

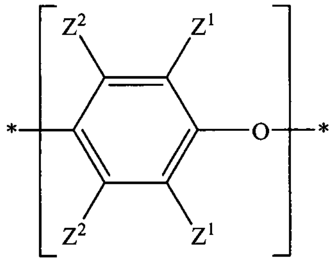

wherein for each repeating unit, each $Z^1$ is independently halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atoms; and each $Z^2$ is independently hydrogen, halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atom;
wherein the polysiloxane block comprises repeating units having the structure

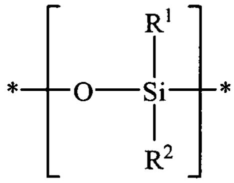

wherein each occurrence of $R^1$ and $R^2$ is independently hydrogen, $C_1$-$C_{12}$ hydrocarbyl or $C_1$-$C_{12}$ halohydrocarbyl; and wherein the polysiloxane block further comprises a terminal unit having the structure

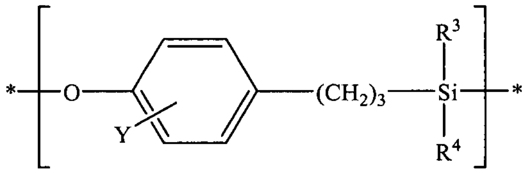

wherein Y is hydrogen, $C_1$-$C_{12}$ hydrocarbyl, $C_1$-$C_{12}$ hydrocarbyloxy, or halogen, and wherein each occurrence of $R^3$ and $R^4$ is independently hydrogen, $C_1$-$C_{12}$ hydrocarbyl or $C_1$-$C_{12}$ halohydrocarbyl.

**8.** The composition of any of claims 1-7,
wherein the poly(arylene ether) block comprises arylene ether repeating units having the structure

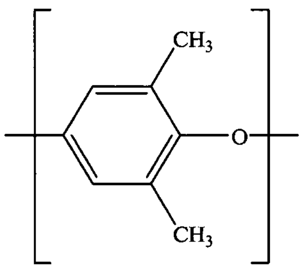

;

and
wherein the polysiloxane block has the structure

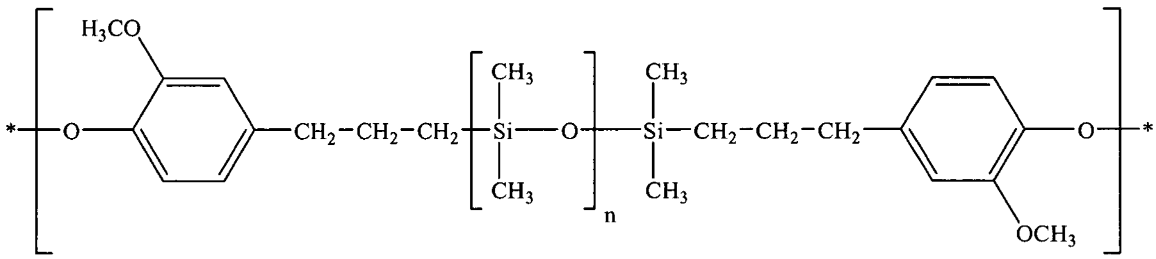

wherein n is 30 to 60.

**9.** The composition of any of claims 1-8, wherein the process for forming the poly(arylene ether)-polysiloxane block copolymer reaction product further comprises precipitating an oxidative copolymerization reaction mixture with an antisolvent comprising isopropanol to form the poly(arylene ether)-polysiloxane block copolymer reaction product, and wherein the poly(arylene ether)-polysiloxane block copolymer reaction product comprises less than 1.5 weight percent of the hydroxyaryl-terminated polysiloxane, based on the total weight of the poly(arylene ether)-polysiloxane block copolymer reaction product.

**10.** The composition of any of claims 1-9, wherein the flame retardant comprises resorcinol bis(diphenyl phosphate), bisphenol A bis(diphenyl phosphate), or a mixture thereof.

**11.** The composition of any of claims 1-9, wherein the composition consists essentially of the poly(arylene ether), the hydrogenated block copolymer, the flame retardant, and, optionally, 0.1 to 10 weight percent of one or more additives selected from the group consisting of stabilizers, mold release agents, processing aids, drip retardants, nucleating agents, UV blockers, dyes, pigments, antioxidants, anti-static agents, blowing agents, mineral oil, metal deactivators, antiblocking agents, nanoclays, and electrically conductive agents.

**12.** The composition of any of claims 1-11, wherein the composition exhibits a flame retardancy performance class of V-0 at a sample thickness of at most 1.5 mm, measured according to Underwriter's Laboratory Bulletin 94 "Tests for Flammability of Plastic Materials, UL 94", 20 mm Vertical Burning Test, and at least two of the following properties:

a notched Izod impact strength of at least 150 joules per meter, measured between -30°C and -40°C using a pendulum energy of 2.7 joules and an impact velocity of 3.5 meters per second according to ASTM D 256-10;
a melt mass-flow rate of at least 5 grams per 10 minutes, measured at 300°C, a dwell time of 375 seconds, and a load of 5 kilograms according to ASTM D 1238-10, Procedure B; and
a heat deflection temperature of at least 105°C, measured at a sample thickness of 3.2 millimeters and a stress of 1.82 megapascals according to ASTM D 648-07.

**13.** An injection molded article comprising the composition of any of claims 1-12.

**14.** The injection molded article of claim 13, wherein the injection molded article is a photovoltaic junction box or a photovoltaic connector.

**15.** The composition of claim 1, comprising:

67 to 87 weight percent of the poly(arylene ether)-polysiloxane block copolymer reaction product;

wherein the poly(arylene ether) block comprises arylene ether repeating units having the structure

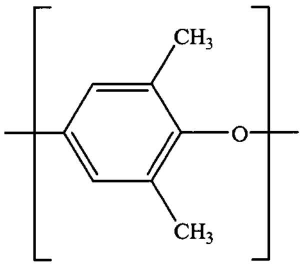
;

wherein the polysiloxane block has the structure

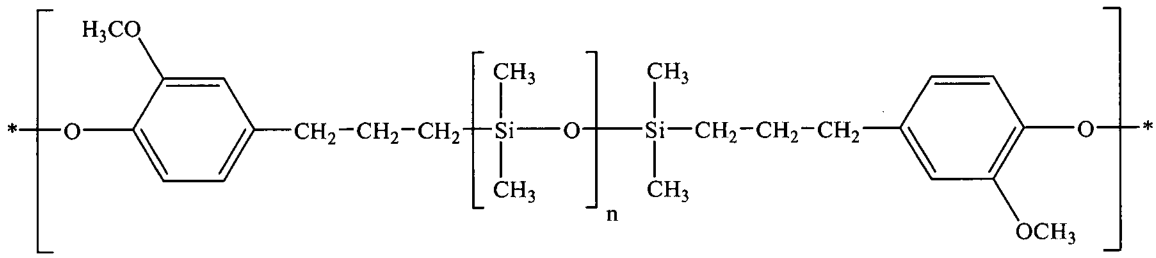

wherein n is 30 to 60;
wherein the poly(arylene ether)-polysiloxane block copolymer reaction product comprises 1 to 8 weight percent siloxane repeating units and 92 to 99 weight percent arylene ether repeating units;
5 to 17 weight percent of a styrenic polymer consisting of a hydrogenated block copolymers of an alkenyl aromatic compound and a conjugated diene; and 8 to 15 weight percent of a flame retardant comprising resorcinol bis(diphenyl phosphate), bisphenol A bis(diphenyl phosphate), or a mixture thereof.

## Patentansprüche

1. Zusammensetzung, umfassend: mehr als 55 bis 95 Gewichtsprozent eines Poly(arylenether)-Polysiloxan-Block-Copolymer-Reaktionsprodukts umfassend
ein Poly(arylenether)-Homopolymer und
ein Poly(arylenether)-Polysiloxan-Block-Copolymer umfassend

    einen Poly(arylenether)-Block und
    einen Polysiloxan-Block umfassend im Durchschnitt 20 bis 80 Siloxan-Wiederholungseinheiten;

   wobei das Poly(arylenether)-Polysiloxan-Block-Copolymer-Reaktionsprodukt 1 bis 30 Gewichtsprozent Siloxan-Wiederholungseinheiten und 70 bis 99 Gewichtsprozent Arylenether-Wiederholungseinheiten umfasst;
wobei das Poly(arylenether)-Polysiloxan-Block-Copolymer-Reaktionsprodukt das Produkt eines Verfahrens ist, welches oxidatives Copolymerisieren eines Monomergemisches umfassend ein einwertiges Phenol und ein Hydroxyaryl-terminiertes Polysiloxan umfasst; und
wobei das Poly(arylenether)-Polysiloxan-Block-Copolymer-Reaktionsprodukt ein gewichtsmittleres Molekulargewicht von wenigstens 30,000 atomaren Masseeinheiten, gemessen durch Gel-Permeations-Chromatographie gegen Polystyrol-Standards aufweist; 1 bis 40 Gewichtsprozent eines Styrolpolymers ausgewählt aus der Gruppe bestehend aus kautschukmodifizierten Polystyrolen, unhydrierten Block-Copolymeren einer Alkenyl-aromatischen Verbindung und eines konjugierten Diens, hydrierten Block-Copolymeren einer Alkenyl-aromatischen Verbindung und eines konjugierten Diens, und Gemischen davon; und
1 bis 40 Gewichtsprozent eines Flammschutzmittels umfassend einen Organophosphatester;
wobei alle Gewichtsprozentangaben auf das Gesamtgewicht der Zusammensetzung bezogen sind, es sei denn eine verschiedene Gewichtsbasis ist angegeben; und
wobei die Zusammensetzung ein Biegemodul von 1500 bis 3.000 Megapascal, gemessen bei 23°C und einer Probendicke von 3.2 Millimeter gemäß ASTM D 790-10, zeigt.

2. Zusammensetzung nach Anspruch 1, umfassend 67 bis 87 Gewichtsprozent des Poly(arylenether)-Polysiloxan-Block-Copolymer-Reaktionsprodukts;
5 bis 17 Gewichtsprozent des Styrolpolymers; und
8 bis 15 Gewichtsprozent des Flammschutzmittels.

**3.** Zusammensetzung nach Anspruch 1 oder 2, wobei das Styrolpolymer aus dem hydrierten Block-Copolymer einer Alkenyl-aromatischen Verbindung und eines konjugierten Diens besteht; und das Flammschutzmittel aus dem Organophosphatester besteht.

**4.** Zusammensetzung nach Anspruch 1 oder 2, wobei das Styrolpolymer aus dem kautschukmodifizierten Polystyrol und dem unhydrierten Block-Copolymer einer Alkenyl-aromatischen Verbindung und eines konjugierten Diens besteht.

**5.** Zusammensetzung nach irgendeinem der Ansprüche 1 bis 3, wobei die Zusammensetzung mehr als 55 bis 65 Gewichtsprozent des Poly(arylenether)-Polysiloxan-Block-Reaktionsprodukts umfasst, und das Flammschutzmittel Resorcinol-bis(diphenylphosphat) umfasst.

**6.** Zusammensetzung nach irgendeinem der Ansprüche 1 bis 3, wobei die Zusammensetzung 65 bis 95 Gewichtsprozent des Poly(arylenether)-Polysiloxan-Block-Copolymer-Reaktionsprodukts umfasst, und das Flammschutzmittel Bisphenol-A-bis(diphenyl phosphat) umfasst.

**7.** Zusammensetzung nach irgendeinem der Ansprüche 1 bis 6, wobei der Poly(arylenether)-Block Arylenether-Wiederholungseinheiten mit der Struktur

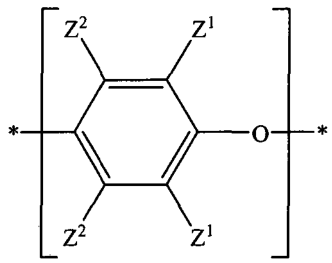

umfasst, wobei für jede Wiederholungseinheit jedes $Z^1$ unabhängig Halogen, unsubstitutiertes oder substitutiertes $C_1$-$C_{12}$-Hydrocarbyl mit der Maßgabe, dass die Hydrocarbylgruppe nicht tertiäres Hydrocarbyl ist, $C_1$-$C_{12}$-Hydrocarbylthio, $C_1$-$C_{12}$-Hydrocarbyloxy, oder $C_2$-$C_{12}$-Halogenhydrocarbyloxy ist, wobei wenigstens zwei Kohlenstoffatome das Halogen- und Sauerstoffatom trennen; und jedes $Z^2$ unabhängig Wasserstoff, Halogen, unsubstitutiertes oder substitutiertes $C_1$-$C_{12}$-Hydrocarbyl mit der Maßgabe, dass die Hydrocarbylgruppe nicht tertiäres Hydrocarbyl ist, $C_1$-$C_{12}$-Hydrocarbylthio, $C_1$-$C_{12}$-Hydrocarbyloxy, oder $C_2$-$C_{12}$-Halogenhydrocarbyloxy ist, wobei wenigstens zwei Kohlenstoffatome die Halogen- und Sauerstoffatome trennen;
wobei der Polysiloxan-Block Wiederholungseinheiten mit der Struktur

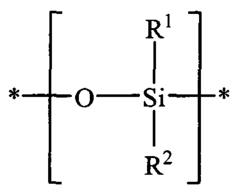

umfasst, wobei jedes Auftreten von $R^1$ und $R^2$ unabhängig Wasserstoff, $C_1$-$C_{12}$-Hydrocarbyl oder $C_1$-$C_{12}$-Halogenhydrocarbyl bedeutet; und
wobei der Polysiloxan-Block weiterhin eine terminale Einheit mit der Struktur

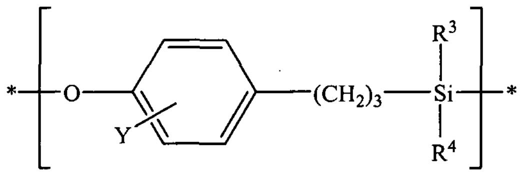

umfasst, wobei Y Wasserstoff, $C_1$-$C_{12}$-Hydrocarbyl, $C_1$-$C_{12}$-Hydrocarbyloxy oder Halogen ist, und wobei jedes Auftreten von $R^3$ und $R^4$ unabhängig Wasserstoff, $C_1$-$C_{12}$-Hydrocarbyl oder $C_1$-$C_{12}$-Halogenhydrocarbyl bedeutet.

**8.** Zusammensetzung nach irgendeinem der Ansprüche 1 bis 7, wobei der Poly(arylenether)-Block Arylenether-Wiederholungseinheiten mit der Struktur

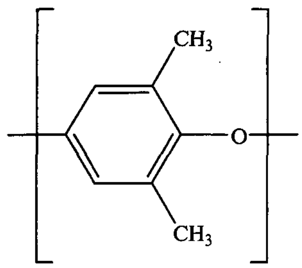

umfasst; und
wobei der Polysiloxan-Block die Struktur

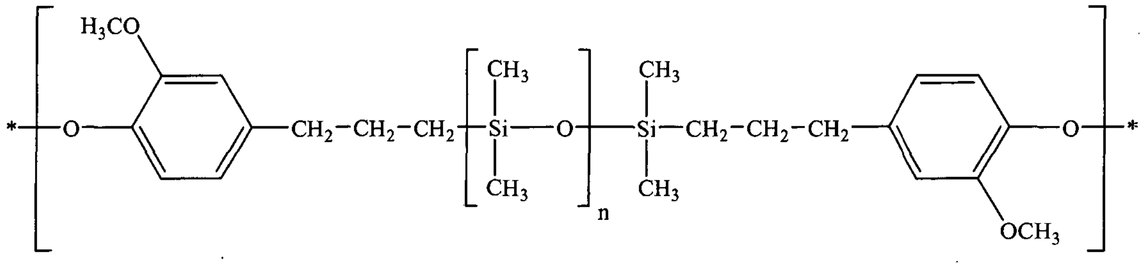

aufweist, wobei n 30 bis 60 ist.

**9.** Zusammensetzung nach irgendeinem der Ansprüche 1 bis 8, wobei das Verfahren zur Bildung des Poly(arylenether)-Polysiloxan-Block-Copolymer-Reaktionsprodukts weiterhin das Fällen eines oxidativen Copolymerisationsreaktionsgemisches mit einem Gegenlösungsmittel umfassend Isopropanol zur Bildung des Poly(arylenether)-Polysiloxan-Block-Copolymer-Reaktionsprodukts umfasst, und wobei das Poly(arylenether)-Polysiloxan-Block-Copolymer-Reaktionsprodukt weniger als 1,5 Gewichtsprozent des Hydroxyaryl-terminierten Polysiloxans umfasst, bezogen auf das Gesamtgewicht des Poly(arylenether)-Polysiloxan-Block-Copolymer-Reaktionsprodukts.

**10.** Zusammensetzung nach irgendeinem der Ansprüche 1 bis 9, wobei das Flammschutzmittel Resorcinol-bis(diphenylphosphat), Bisphenol-Nbis( diphenyl phosphat), oder ein Gemisch davon umfasst.

**11.** Zusammensetzung nach irgendeinem der Ansprüche 1 bis 9, wobei die Zusammensetzung im wesentlichen aus dem Poly(arylenether), dem hydrierten Block-Copolymer, dem Flammschutzmittel, und, gegebenenfalls, 0,1 bis 10 Gewichtsprozent von einem oder mehreren Additiven ausgewählt aus der Gruppe bestehend aus Stabilisatoren, Formtrennmitteln, Verarbeitungshilfsstoffen, Tropfverzögerungsmitteln, Nukleierungsmitteln, UV-Blockern, Farbstoffen, Pigmenten, Antioxidationsmitteln, antistatischen Mitteln, Treibmitteln, Mineralöl, Metalldeaktivatoren, Antiblock-Mitteln, Nanotonen, und elektrisch leitenden Mitteln besteht.

**12.** Zusammensetzung nach irgendeinem der Ansprüche 1 bis 11, wobei die Zusammensetzung eine Flammschutzmittel-Leistungsklasse von V-0 bei einer Probendicke von höchstens 1,5 mm, gemessen gemäß Underwriter's Laboratory Bulletin 94 "Tests for Flammability of Plastic Materials, UL 94", 20 mm Vertical Burning Test (vertikaler

Brenntest), und wenigstens zwei der folgenden Eigenschaften zeigt:

eine Kerbschlagzähigkeit nach Izod von wenigstens 150 Joule pro Meter, gemessen zwischen -30°C und -40°C unter Verwendung einer Pendelenergie von 2,7 Joule und einer Aufschlaggeschwindigkeit von 3,5 Meter pro Sekunde gemäß ASTM D 256-10;
einer Schmelzmassen-Flussrate von wenigstens 5 Gramm pro 10 Minuten, gemessen bei 300°C, einer Verweilzeit von 375 Sekunden, und einer Beladung von 5 Kilogramm gemäß ASTM D 1238-10, Prozedur B; und einer Wärmeformbeständigkeitstemperatur von wenigstens 105°C, gemessen bei einer Probendicke von 3,2 Millimeter und einer Belastung von 1.82 Megapascal gemäß ASTM D 648-07.

**13.** Spritzgussgegenstand, umfassend die Zusammensetzung nach irgendeinem der Ansprüche 1 bis 12.

**14.** Spritzgussgegenstand nach Anspruch 13, wobei der Spritzgussgegenstand eine Photovoltaik-Anschluss-Box oder ein Photovoltaik-Steckverbinder (-Konnektor) ist.

**15.** Zusammensetzung nach Anspruch 1, umfassend:

67 bis 87 Gewichtsprozent des Poly(arylenether)-Polysiloxan-Block-Copolymer-Reaktionsprodukts;
wobei der Poly(arylenether)-Block Arylenether-Wiederholungseinheiten mit der Struktur

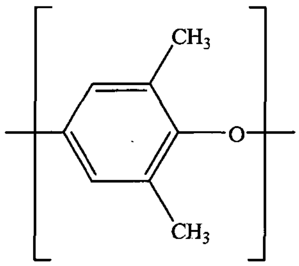

;

umfasst; wobei der Polysiloxan-Block die Struktur

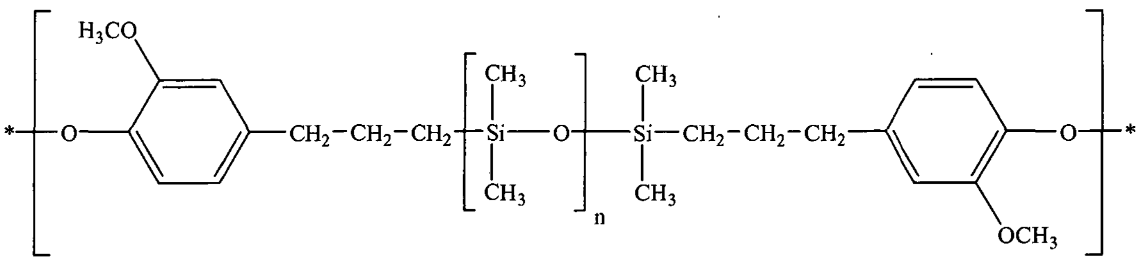

aufweist, wobei n 30 bis 60 ist;
wobei das Poly(arylenether)-Polysiloxan-Block-Copolymer-Reaktionsprodukt 1 bis 8 Gewichtsprozent Siloxan-Wiederholungseinheiten und 92 bis 99 Gewichtsprozent Arylenether-Wiederholungseinheiten umfasst;
5 bis 17 Gewichtsprozent eines Styrölpolymers bestehend aus hydrierten Block-Copolymeren einer Alkenyl-aromatischen Verbindung und eines konjugierten Diens; und 8 bis 15 Gewichtsprozent eines Flammschutzmittels umfassend Resorcinol-bis(diphenylphosphat), Bisphenol-A-bis(diphenyl phosphat), oder ein Gemisch davon.

## Revendications

**1.** Composition comprenant :

plus de 55 à 95 pourcents en poids d'un produit de la réaction d'un copolymère à blocs poly(arylène éther)-polysiloxane, comprenant

un homopolymère de poly(arylène éther), et
un copolymère à blocs poly(arylène éther)-polysiloxane, comprenant

un bloc poly(arylène éther), et
un bloc polysiloxane, comprenant en moyenne 20 à 80 motifs répétitifs siloxane ;

dans laquelle le produit de la réaction d'un copolymère à blocs poly(arylène éther)-polysiloxane comprend 1 à 30 pourcents en poids de motifs répétitifs siloxane et 70 à 99 pourcents en poids de motifs répétitifs arylène éther ;
dans laquelle le produit de la réaction d'un copolymère à blocs poly(arylène éther)-polysiloxane est le produit d'un procédé comprenant la copolymérisation oxydative d'un mélange de monomères comprenant un monophénol et un polysiloxane à terminaison hydroxyaryle ; et
dans laquelle le produit de la réaction d'un copolymère à blocs poly(arylène éther)-polysiloxane présente une masse moléculaire moyenne en masse d'au moins 30 000 unités de masse atomique, mesurée par chromatographie par perméation de gel par comparaison avec des étalons de polystyrène ;
1 à 40 pourcents en poids d'un polymère styrénique choisi dans le groupe consistant en les polystyrènes modifiés par un caoutchouc, les copolymères à blocs non-hydrogénés d'un composé alcénylaromatique et d'un diène conjugué, les copolymères à blocs hydrogénés d'un composé alcénylaromatique et d'un diène conjugué, et les mélanges de ceux-ci ; et
1 à 40 pourcents en poids d'un retardateur de flamme comprenant un ester organophosphate ;
dans laquelle tous les pourcentages en poids sont rapportés au poids total de la composition, à moins qu'une base pondérale différente soit spécifiée ; et
la composition présentant un module d'élasticité en flexion de 1500 à 3000 MPa, mesuré à 23°C pour une épaisseur de l'éprouvette de 3,2 millimètres, selon ASTM D 790-10.

**2.** Composition selon la revendication 1, comprenant 67 à 87 pourcents en poids du produit de la réaction d'un copolymère à blocs poly(arylène éther)-polysiloxane ;
5 à 17 pourcents en poids du polymère styrénique ; et
8 à 15 pourcents en poids du retardateur de flamme.

**3.** Composition selon la revendication 1 ou 2, dans laquelle le polymère styrénique consiste en le copolymère à blocs hydrogénés d'un composé alcénylaromatique et d'un diène conjugué ; et le retardateur de flamme consiste en l'ester organophosphate.

**4.** Composition selon la revendication 1 ou 2, dans laquelle le polymère styrénique consiste en le polystyrène modifié par un caoutchouc et en le copolymère à blocs hydrogénés d'un composé alcénylaromatique et d'un diène conjugué.

**5.** Composition selon l'une quelconque des revendications 1 à 3, la composition comprenant plus de 55 à 65 pourcents en poids du produit de la réaction de blocs poly(arylène éther)-polysiloxane, et le retardateur de flamme comprenant du bis(diphénylphosphate) de résorcinol.

**6.** Composition selon l'une quelconque des revendications 1 à 3, la composition comprenant 65 à 95 pourcents en poids du produit de la réaction d'un copolymère à blocs poly(arylène éther)-polysiloxane, et le retardateur de flamme comprenant du bis(diphénylphosphate) de bisphénol A.

**7.** Composition selon l'une quelconque des revendications 1 à 6,
dans laquelle le bloc poly(arylène éther) comprend des motifs répétitifs arylène éther ayant la structure

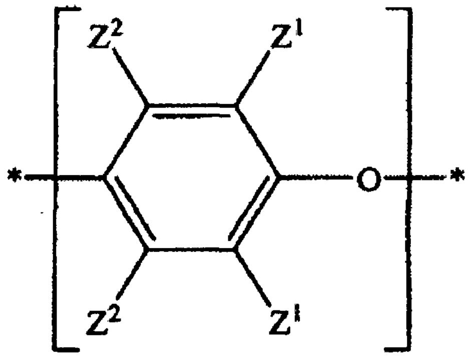

dans laquelle, pour chaque motif répétitif, chaque $Z^1$ représente d'une manière indépendante un groupe halogéno, hydrocarbyle en $C_1$-$C_{12}$ non-substitué ou substitué, à la condition que le groupe hydrocarbyle ne soit pas un groupe hydrocarbyle tertiaire, hydrocarbylthio en $C_1$-$C_{12}$, hydrocarbyloxy en $C_1$-$C_{12}$ ou halogènhydrocarbyloxy en $C_2$-$C_{12}$, où au moins deux atomes de carbone séparent les atomes d'halogène et d'oxygène ; et chaque $Z^2$ est d'une manière indépendante un atome d'hydrogène, un groupe halogéno, hydrocarbyle en $C_1$-$C_{12}$ non-substitué ou substitué, à la condition que le groupe hydrocarbyle ne soit pas un groupe hydrocarbyle tertiaire, hydrocarbylthio en $C_1$-$C_{12}$, hydrocarbyloxy en $C_1$-$C_{12}$ ou halogènhydrocarbyloxy en $C_2$-$C_{12}$, où au moins deux atomes de carbone séparent les atomes d'halogène et d'oxygène ;
dans laquelle le bloc polysiloxane comprend des motifs répétitifs ayant la structure

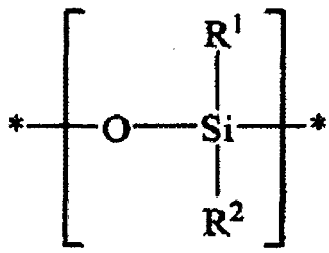

dans laquelle chaque occurrence de $R^1$ et $R^2$ représente d'une manière indépendante un atome d'hydrogène, un groupe hydrocarbyle en $C_1$-$C_{12}$ ou halogènhydrocarbyle en $C_1$-$C_{12}$ ; et
dans laquelle le bloc polysiloxane comprend en outre un motif terminal ayant la structure

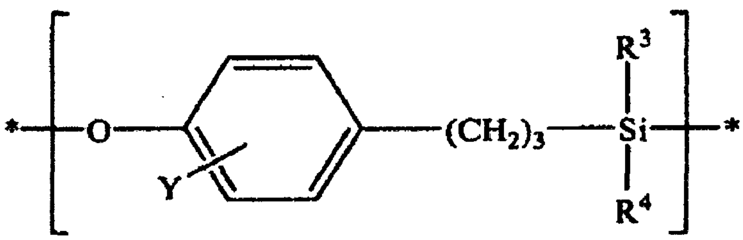

dans laquelle Y est un atome d'hydrogène, un groupe hydrocarbyle en $C_1$-$C_{12}$, hydrocarbyloxy en $C_1$-$C_{12}$ ou halogéno, et où chaque occurrence de $R^3$ et $R^4$ représente d'une manière indépendante un atome d'hydrogène, un groupe hydrocarbyle en $C_1$-$C_{12}$ ou halogènhydrocarbyle en $C_1$-$C_{12}$.

**8.** Composition selon l'une quelconque des revendications 1 à 7,
dans laquelle le bloc poly(arylène éther) comprend des motifs répétitifs arylène éther ayant la structure

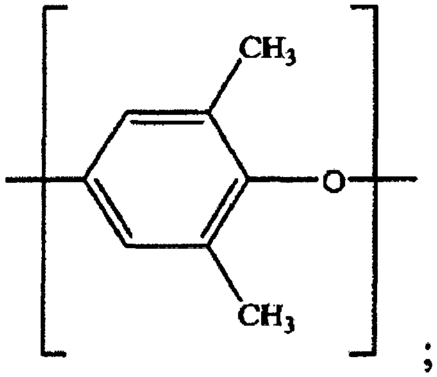

et

dans laquelle le bloc polysiloxane a la structure

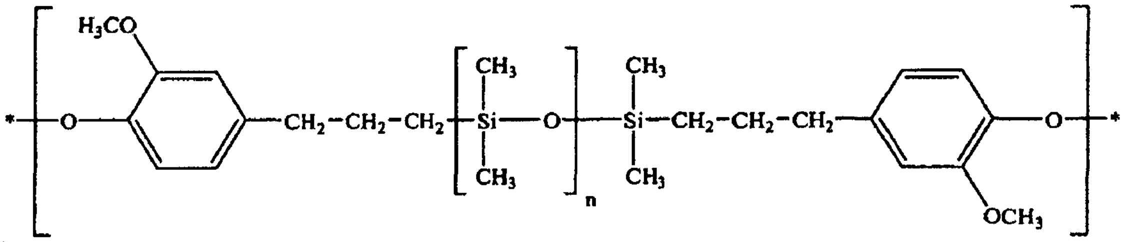

dans laquelle n vaut 30 à 60.

**9.** Composition selon l'une quelconque des revendications 1 à 8, dans laquelle le procédé de formation du produit de la réaction d'un copolymère à blocs poly(arylène éther)-polysiloxane comprend en outre la précipitation d'un mélange de réaction de copolymérisation oxydative avec un anti-solvant comprenant de l'isopropanol, pour former le produit de la réaction d'un copolymère à blocs poly(arylène éther)-polysiloxane, et dans laquelle le produit de la réaction d'un copolymère à blocs poly(arylène éther)-polysiloxane comprend moins de 1,5 pourcents en poids du polysiloxane à terminaison hydroxyalkyle, par rapport au poids total du produit de la réaction d'un copolymère à blocs poly(arylène éther)-polysiloxane.

**10.** Composition selon l'une quelconque des revendications 1 à 9, dans laquelle le retardateur de flamme comprend du bis(diphénylphosphate) de résorcinol, du bis(diphénylphosphate) de bisphénol A, ou un mélange de ceux-ci.

**11.** Composition selon l'une quelconque des revendications 1 à 9, la composition consistant essentiellement en le poly(arylène éther), le copolymère à blocs hydrogénés, le retardateur de flamme et en option 0,1 à 10 pourcents en poids d'un ou plusieurs additifs choisis dans le groupe consistant en les stabilisants, les agents de démoulage, les auxiliaires de mise en oeuvre, les retardateurs d'égouttage, les agents de nucléation, les agents bloquant les UV, les colorants, les pigments, les antioxydants, les agents antistatiques, les agents porogènes, une huile minérale, les désactivateurs de métaux, les agents anti-adhérence de contact, les nano-argiles, et les agents conducteurs de l'électricité.

**12.** Composition selon l'une quelconque des revendications 1 à 11, la composition présentant une note de tenue au feu égale à V-0, pour une épaisseur de l'éprouvette d'au moins 1,5 mm, mesurée conformément à l'essai "20 mm Vertical Burning Test" (essai à la flamme avec combustion verticale sur 20 mm) de l'Underwriter's Laboratory Bulletin 94 "Tests for Flammability of Plastic Material, UL 94" (essais d'inflammabilité des matériaux plastiques, UL 94), et au moins deux des propriétés suivantes :

une résistance au choc Izod sur barreau entaillé d'au moins 1250 Joules par mètre mesurée entre -30 et - 40°C par utilisation d'une énergie au mouton-pendule de 2,7 joules, et d'une vitesse de choc de 3,5 mètres par seconde, selon ASTM D 256-10 ;
un indice de fluidité en masse d'au moins 5 grammes par 10 minutes, mesuré à 300°C, pour un temps de séjour de 375 secondes et une charge de 5 kilogrammes, selon ASTM D 1238-10, Procédure B ; et

une température de déformation thermique d'au moins 105°C, mesurée pour une épaisseur de l'éprouvette de 3,2 millimètres et une contrainte de 1,82 mégapascals, selon ASTM D 648-07.

**13.** Objet moulé par injection comprenant la composition selon l'une quelconque des revendications 1 à 12.

**14.** Objet moulé par injection selon la revendication 13, l'objet moulé par injection étant une boîte de jonction photovoltaïque ou un connecteur photovoltaïque.

**15.** Composition selon la revendication 1, comprenant :

67 à 86 pourcents en poids du produit de la réaction d'un copolymère à blocs poly(arylène éther)-polysiloxane ; dans laquelle le bloc poly(arylène éther) comprend des motifs répétitifs arylène éther ayant la structure

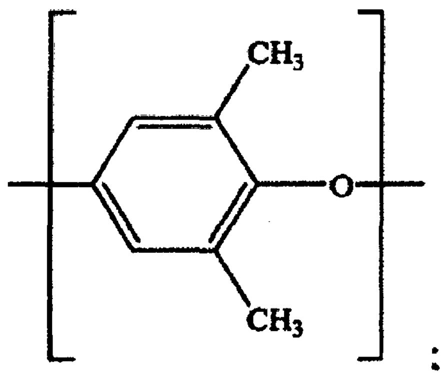

dans laquelle le bloc polysiloxane a la structure

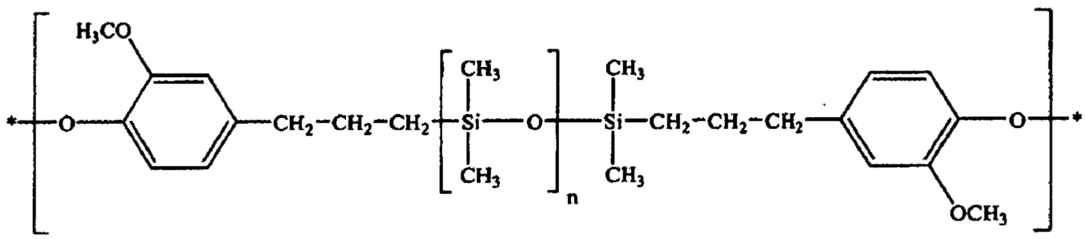

dans laquelle n vaut 30 à 60 ;
dans laquelle le produit de la réaction d'un copolymère à blocs poly(arylène éther)-polysiloxane comprend 1 à 8 pourcents en poids de motifs répétitifs siloxane et 92 à 99 pourcents en poids de motifs répétitifs arylène éther ;
5 à 17 pourcents en poids d'un polymère styrénique consistant en des copolymères à blocs hydrogénés d'un composé alcénylaromatique et d'un diène conjugué ; et
8 à 15 pourcents en poids d'un retardateur de flamme comprenant du bis(diphénylphosphate) de résorcinol, du bis (diphénylphosphate) de bisphénol A, ou un mélange de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100139944 A1, Guo
- US 20090318635 A, Carillo
- US 16913711 A
- US 20090318635 A1
- US 7291036 B1, Daily
- US 7824189 B, Lauermann
- US 20100218797 A1, Coyle
- US 20100294903 A1, Shmukler


### Non-patent literature cited in the description


- *CHEMICAL ABSTRACTS,* 89492-23-9
- *CHEMICAL ABSTRACTS,* 78-33-1
- *CHEMICAL ABSTRACTS,* 57583-54-7
- *CHEMICAL ABSTRACTS,* 181028-79-5
- *CHEMICAL ABSTRACTS,* 115-86-6
- *CHEMICAL ABSTRACTS,* 68937-41-7
- **K. P. CHAN et al.** Facile Quantitative Analysis of Hydroxyl End Groups of Poly(2,6-dimethyl-1,4-phenylene oxide)s by P NMR Spectroscopy. *Macromolecules,* 1994, vol. 27, 6371-6375
- *CHEMICAL ABSTRACTS,* 25134-01-4
- *CHEMICAL ABSTRACTS,* 66070-58-4
- *CHEMICAL ABSTRACTS,* 68648-89-5
- *CHEMICAL ABSTRACTS,* 9003-07-0
- *CHEMICAL ABSTRACTS,* 9010-79-1
- *CHEMICAL ABSTRACTS,* 72623-83-7
- *CHEMICAL ABSTRACTS,* 471-34-1
- *CHEMICAL ABSTRACTS,* 9003-29-6
- *CHEMICAL ABSTRACTS,* 1306-06-5
- *CHEMICAL ABSTRACTS,* 9002-84-0
- *CHEMICAL ABSTRACTS,* 125542-70-3
- *CHEMICAL ABSTRACTS,* 691397-13-4
- *CHEMICAL ABSTRACTS,* 1309-48-4
- *CHEMICAL ABSTRACTS,* 1314-98-3
- *CHEMICAL ABSTRACTS,* 1314-13-2
- *CHEMICAL ABSTRACTS,* 13463-67-7
- *CHEMICAL ABSTRACTS,* 29598-76-3
- *CHEMICAL ABSTRACTS,* 31570-04-4
- *CHEMICAL ABSTRACTS,* 6683-19-8